# EUROPÄISCHE PATENTSCHRIFT

(11) **EP 1 761 376 B1**
(45) Veröffentlichungstag und Bekanntmachung des Hinweises auf die Patenterteilung: **13.01.2010**
(21) Anmeldenummer: 05752571.9
(22) Anmeldetag: 15.06.2005
(51) Int. Cl.: B29C 49/48, B29C 49/58, B29C 49/56

(54) **HERSTELLVERFAHREN UND EXTRUSIONSBLASMASCHINE FÜR KUNSTSTOFFBEHÄLTER**
PROCESS AND EXTRUSION BLOW-MOULDING MACHINE FOR PRODUCING PLASTIC CONTAINERS
PROCEDE DE FABRICATION ET MACHINE D'EXTRUSION-SOUFFLAGE DE CONTENANTS EN PLASTIQUE

(30) Priorität: 28.06.2004 CH 108604
(43) Veröffentlichungstag der Anmeldung: 14.03.2007
(73) Patentinhaber: Alpla-Werke Alwin Lehner GmbH und Co.KG, 6971 Hard (AT)
(72) Erfinder: KÜNZ, Johann, A-6971 Hard (AT)
(74) Vertreter: Hasler, Erich
(86) Internationale Anmeldenummer: PCT/EP2005/006430
(87) Internationale Veröffentlichungsnummer: WO 2006/000329

(56) Entgegenhaltungen:
- EP-A- 0 633 123
- US-A- 3 456 290
- US-A- 4 650 628
- US-A- 4 968 242
- US-A- 5 372 495
- US-E- R E23 564

## Beschreibung

Die Erfindung betrifft ein Herstellverfahren und eine Extrusionsblasmaschine für Kunststoffbehälter, insbesondere für Kunststoffflaschen, gemäss den Oberbegriffen der jeweiligen unabhängigen Verfahrens- bzw. Vorrichtungsansprüche.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Öl, Reinigungsutensilien, Kosmetika usw., kommen hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die Herstellung von Kunststoffbehältnissen, insbesondere Kunststoffflaschen, beispielsweise aus Polyethylen oder Polypropylen, erfolgt im Extrusionsblasverfahren, insbesondere in einem Schlauchblasverfahren. Dabei wird von einem Extruderkopf ein Kunststoffschlauch extrudiert, in Blasformwerkzeuge eingebracht, über einen Blasdorn durch Überdruck aufgeblasen und durch Kühlung ausgehärtet. Die dafür eingesetzten Extrusionsblasmaschinen besitzen in der Regel wenigstens einen Extruder zur Zuführung des Kunststoffmaterials. Der Ausgang des Extruders ist mit dem Extruderkopf verbunden, an dessen vorzugsweise in der Öffnungsweite regulierbarer Austrittsdüse der ein oder mehrschichtig extrudierte Schlauch austritt. Der extrudierte Schlauch wird an ein Blasformwerkzeug übergeben und innerhalb dessen Kavität mit einem Blasdorn aufgeblasen. Der Kunststoffschlauch kann ein- oder mehrschichtig sein, er kann als Schlauch mit Sichtstreifen, Dekorstreifen oder bezogen auf den Umfang mit mehreren, beispielsweise verschiedenfarbigen, Segmenten extrudiert sein.

Die Blasstation mit dem Blasdorn ist üblicherweise seitlich des Extrusionskopfes angeordnet. Das mit dem extrudierten Schlauch beschickte Blasformwerkzeug wird in die Blasstation bewegt, wo dann der Blasdorn, üblicherweise von oben, in die Blasformkavität eingefahren wird. Für den kontinuierlichen Betrieb sind bei bekannten Extrusionsblasmaschinen meist zwei Blasstationen vorgesehen. Jede Blasstation ist mit einem Blasformwerkzeug ausgestattet. Die Blasstationen sind dabei zu beiden Seiten des Extruders, einander gegenüberliegend angeordnet und weisen Blasformtische mit den Blasformwerkzeugen auf, die abwechselnd unter den Extruderkopf bewegt werden, um den extrudierten Schlauch zu empfangen. Dabei wird das Blasformwerkzeug zum Abholen des Schlauches geöffnet. Nach dem Schliessen des Blasformwerkzeugs wird der Schlauch zwischen dem Extrusionkopf und dem Blasformwerkzeug abgetrennt. Danach wird der Blasformtisch wieder in die Blasstation bewegt, wo der Blasdorn in die Kavität des Blasformwerkzeugs eingefahren und der Schlauch gemäss der Blasformkavität aufgeblasen und danach entnommen wird. Bei Mehrfachextrusionsköpfen und Mehrfachblasformwerkzeugen ist jede Blasstation mit einer korrespondierenden Anzahl von Blasdornen ausgestattet, die gemeinsam in die Blasformkavitäten eingefahren werden. Gesamthaft bilden der Extruder mit dem Extruderkopf und die beiden Blasstationen etwa die Form eines T. Dabei stellt der Extruder mit dem Extruderkopf den langen T-Strich dar, während die beiden Blasformtische abwechselnd entlang der kurzen Querstrichhälften unter den Extruderkopf bewegbar sind.

Eine von der Anmelderin entwickelte, neuartige Extrusionsblasmaschine sieht vor, dass der extrudierte Kunststoffschlauch während des gesamten Herstellungszyklusses eines Behälters kontinuierlich gehalten ist. Dazu sind an gegenüberliegenden Seiten der Blasformwerkzeuganordnung Halteeinrichtungen für den Kunststoffschlauch vorgesehen. Die Haltevorrichtungen für den Schlauch werden einerseits durch den Blasdorn und andererseits durch den Extruderkopf gebildet. An der dem Extruderkopf abgewandten Seite der Blasformwerkzeuganordnung ist eine Trenneinrichtung vorgesehen. Die Blasformwerkzeuganordnung ist zwischen dem Extruderkopf und dem Blasdorn angeordnet. Die Blasformkavität weist eine Mündung an der der Extrusionsdüse abgewandten Seite der Blasformwerkzeuganordnung auf, in welche der Blasdorn in die Blasformkavität einfahrbar ist. Durch die permanente Führung des Kunststoffschlauchs werden Fehllagen verhindert. Falls es erforderlich ist, kann wegen der permanenten Führung des Kunststoffschauchs dessen Lage gezielt gegenüber der Extrusionsrichtung verändert werden. Auf diese Weise kann beispielsweise auch den Anforderungen von komplizierteren Behältergeometrien Rechnung getragen werden.

Es sind auch Extrusionsblasmaschinen bekannt, bei denen eine Anzahl von Blasformwerkzeugen auf einem rotierenden Rad angeordnet sind. Das Rad steht etwa vertikal und führt die Blasformwerkzeuge etwa tangential an den vom Extrusionskopf kontinuierlich extrudierten Kunststoffschlauch heran. Kurz vor Erreichen des extrudierten Kunststoffschlauchs wird das herangeführte Blasformwerkzeug geöffnet, um den Schlauch abzuholen. Beim Weiterdrehen des Rads wird das Blasformwerkzeug um den eingelegten Schlauch geschlossen und dieser beim Weiterdrehen schliesslich abgeschert. Die Anordnung der Blasformwerkzeuge und die Drehgeschwindigkeit des Rads sind derart gewählt, dass der Schlauch erst abgeschert wird, wenn sich das nachfolgende Blasformwerkzeug um das nächst Schlauchstück geschlossen hat. Der in der Kavität des Blasformwerkzeuges befindliche Schlauch gelangt beim Weiterdrehen des Rades schliesslich in die Blasstation, wo er über einen seitlich in das Formwerkzeug eingeführten Blasdorn gemäss der Blasformkavität aufgeblasen wird. Schliesslich wird der aufgeblasene Hohlkörper durch Öffnen aus dem Blasformwerkzeug ausgegeben. Das am rotierenden Rad angeordnete Blasformwerkzeug wird wieder an den Extrusionskopf herangeführt, um einen weiteren extrudierten Schlauch aufzunehmen.

Bei den Rad-Blasmaschinen ist der Umstand nachteilig, dass sie wegen der grossen Zahl von am Rad angeordneten separaten Blasformwerkzeugen einen relativ hohen Investitionsaufwand für die Bereitstellung der Blasformwerkzeuge erfordern. Auch sind die Blasformwerkzeuge in der Regel nicht vollständig identisch. Dies kann von Blasformwerkzeug zu Blasformwerkzeug zu Qualitätsunterschieden bei den hergestellten Hohlkörpern führen. Der Einsatz von Blasformwerkzeugen mit mehreren Blasformkavitäten gestaltet sich relativ schwierig und teuer. Die Blasformwerkzeuge sind nur an fest vorgegebenen Montagepunkten am Rad befestigbar. Diese werden nach der maximal mit der Maschine herstellbaren Höhe des geblasenen Hohlkörpers festgelegt. Die einmal festgelegten Montagepunkte sind nicht mehr veränderbar. Dies ist auch eine Folge der bei diesen Maschinen üblichen mechanischen Steuerungen über Steuerkurven, Kurvenscheiben und dergleichen. Sollen auf der Rad-Blasmaschine Behälter mit kleinerer Bauhöhe geblasen werden, dann weisen die am Umfang des Rads montierten kleineren Blasformwerkzeuge einen grösseren Winkelabstand voneinander auf. Nachdem der Kunststoffschlauch kontinuierlich aus dem Extrusionskopf austritt, führt dies zu grösseren Abfallmengen in den Bereichen zwischen zwei Blasformwerkzeugen. Der extrudierten Kunststoffschlauch wird von dem entlang einer Kreisform unter dem Extrusionskopf vorbeibewegten Blasformwerkzeug übernommen. Dabei wird der seitlichen Zustellbewegung der schliessenden Blasformhälften eine Kreisbogenbewegung überlagert. Zwar wird durch einen möglichst grossen Radius des Rades versucht, diese Kreisbogenbewegung der Blasformhälften bei der Übernahme des Kunststoffschlauchs möglichst klein zu halten; sie kann aber nicht vollständig beseitigt werden. Auch der Umstand dass der Schlauch zwischen zwei aufeinander folgenden Blasformwerkzeugen einerseits vom Extruderkopf und andererseits vom vorlaufenden Blasformwerkzeug gehalten ist, kann an den geometrischen Verhältnissen nichts ändern. Unter ungünstigen Umständen kann es daher insbesondere bei komplexeren Behältergeometrien dazu kommen, dass der Schlauch nicht ideal in die Blaskavität eingelegt und teilweise zwischen aneinander anliegenden Bereichen der schliessenden Blasformhälften eingeklemmt wird. Dies kann zu unerwünschtem Ausschuss führen.

Die je Zeiteinheit bzw. je Zyklus herstellbare Anzahl von Kunststoffbehältern wirkt sich unmittelbar auf die Wirtschaftlichkeit des Herstellprozesses, auf die Herstellkosten des einzelnen Behälters und damit auf die Amortisation des Blasformwerkzeugs und der Herstellanlage aus. Der Einfluss des Mengenfaktors ist umso grösser, je kleiner der herzustellende Kunststoffbehälter ist. Aus diesem Grund sind auch schon Extrusionsblasanlagen bekannt, bei denen das Blasformwerkzeug je Extrusionsdüse eine Doppelkavität aufweist. Dabei besteht die Doppelkavität aus zwei axial untereinander angeordneten Formkavitäten, die an den Mündungen der aufzublasenden Behälter miteinander in Verbindung stehen. Ein im Mündungsbereich durch einen Kanal des Blasformwerkzeuges lateral zustellbarer Blasdorn bläst aus einem in die Doppelkavität eingelegten Kunststoffschlauch in einem Zyklus zwei Behälter auf.

Aus der US-A-3,456,290 ist beispielsweise eine sogenannte Tandem Extrusionsblasmaschine bekannt, bei der der in die beiden untereinander angeordneten Formkavitäten eingelegte Kunststoffschlauch bereits nach dem Schliessen des Blasformwerkzeugs durch ein lateral zustellbares Messer im Mündungsbereich abgetrennt wird. Das Aufblasen der voneinander getrennten Schlauchabschnitte erfolgt über eine in das Messer integrierte Blasdüse.

Aus der den nächsten Stand der Technik bildenden US-Re. 23,564, gemäß den Oberbegriffen der Ansprüche 1 und 14, ist eine Extrusionsblasmaschine zur Herstellung von Kunststoffbehältern bekannt, die einen Extruderkopf mit einer Extrusionsdüse und eine Blasformwerkzeuganordnung mit einem Formhohlraum besitzt. Der Formhohlraum weist mehrere axial untereinander angeordnete Blasformkavitäten auf, wobei jeweils zwei der Blasformkavitäten spiegelsymmetrisch zueinander und an ihren Mündungsbereichen zusammenhängend angeordnet sind. Eine einzelne Blasformkavität ist durch lateral zustellbare Abquetschmittel von einem Bodenabschnitt der benachbarten Blasformkavität abtrennbar und weist eine Mündung an einer Aussenfläche der Blasformwerkzeuganordnung auf. Die axial untereinander angeordneten Blasformkavitäten sind zunächst zusammenhängend ausgebildet. Der eingelegte Kunststoffschlauch wird durch eine gemeinsame an der Aussenseite des Blasformwerkzeugs angesetzte Blasdüse aufgeblasen. Erst nachdem die Kunststoffbehälter gemäss den Blasformkavitäten aufgeblasen sind, werden die Abquetschmittel lateral zugestellt, um den einzelnen Behälter im Bodenbereich von dem über ihre Mündungsbereiche miteinander verbundenen Paar von Behältern zu trennen.

Während die Fertigungskosten je Kunststoffbehälter mit derartigen Anlagen bereits reduziert werden können besteht dennoch der Wunsch nach einer weiteren Verbesserung hinsichtlich des Durchsatzes und der je Zeiteinheit bzw. Zyklus herstellbaren Anzahl von Einzelbehältern. Gleichzeitig soll dabei der Materialabfall möglichst klein gehalten werden können. Dabei sollen die Abmessungen der Anlage und ihrer Komponenten nicht verändert werden.

Die Lösung dieser Aufgaben besteht in einem Herstellverfahren und in einer Extrusionsblasmaschine für Kunststoffbehälter, insbesondere für Kunststoffflaschen, mit den im kennzeichnenden Abschnitt der jeweiligen unabhängigen Ansprüche angeführten Verfahrensschritten bzw. Merkmalen. Bevorzugte Ausführungsvarianten und/oder Weiterbildungen der Erfindung sind Gegenstand der abhängigen Patentansprüche der jeweiligen Anspruchskategorie.

Bei einem Verfahren zur Herstellung von Kunststoffbehältern, insbesondere von Kunststoffflaschen, in einem Extrusionsblasverfahren, wird ein von einem Extruderkopf extrudierter Kunststoffschlauch in einem vorgebbaren Takt in einen Formhohlraum einer Blasformwerkzeuganordung eingebracht, der eingelegte Kunststoffschlauch durch Überdruck gemäss dem Formhohlraum aufgeblasen und dann entformt. Der extrudierte Kunststoffschlauch wird in einen Formhohlraum eingelegt, der aus mehreren axial untereinander angeordneten Blasformkavitäten zusammengesetzt ist, wobei jeweils zwei der Blasformkavitäten spiegelsymmetrisch zueinander und an ihren Mündungsbereichen zusammenhängend angeordnet sind und eine einzelne Blasformkavität durch einen Abquetschbereich von einem Bodenabschnitt der benachbarten Blasformkavität getrennt ist und eine Mündung an einer Aussenfläche der Blasformwerkzeuganordnung aufweist. Die erfindungsgemässe Verfahrensführung zeichnet sich dadurch aus, dass
- ein der Anzahl der paarweise spiegelsymmetrisch zueinander angeordneten Blasformkavitäten entsprechende Zahl von geführten Blasdornen vorgesehen ist, die in Bohrungen der Blasformwerkzeuganordnung lateral verschiebbar sind und jeweils im Bereich der aneinandergrenzenden Mündungen in die beiden zusammenhängenden Blasformkavitäten eingefahren werden, um die dort eingelegen Abschnitte des extrudierten Kunststoffschlauchs gemäss den Blasformkavitäten aufzublasen, während ein weiterer, freier Blasdorn axial in die Mündung der einzelnen Blasformkavität eingefahren wird, um den dort befindlichen Abschnitt des Kunststoffschlauchs aufzublasen,
- und die gemäss den Blasformkavitäten aufgeblasenen Behälter entformt werden.

Die erfindungsgemässe Verfahrensführung erlaubt es, je Zyklus eine gegenüber den bekanten Extrusionsblasmaschinen deutlich grössere Anzahl von Kunststoffbehältern, ins-besondere von Kunststoffflaschen, herzustellen. Das Verfahren kombiniert die Vorteile von Extrusionsblasmaschinen mit Blasdornen, die innerhalb der Blasformwerkzeuganordnung geführt verstellt werden, mit den Vorteilen von Extrusionsblasmaschinen mit ausserhalb der Blasformwerkzeuganordnung angeordneten freien Blasdornen, die axial auf eine Öffnung einer Blasformkavität zugestellt und in diese eingefahren werden. Die innerhalb der Blasformwerkzeuganordnung verstellbar angeordneten geführten Blasdorne werden in im Bereich der aneinandergrenzenden Mündungen der spiegelsymmetrisch angeordneten Blasformpaare in den extrudierten Schlauch eingefahren. Dabei durchstossen sei die Wandung des Kunststoffschlauchs. Der Durchstossbereich befindet sich aber gerade in demjenigen Abschnitt des Kunststoffschlauchs, in dem die Behälter voneinander getrennt werden. Dabei werden die aufgeblasenen Behälter ober- und unterhalb des Durchstossbereichs abgeschnitten. Der abgeschnittene Abschnitt kann dann beispielsweise wieder rezykliert werden. Die erfindungsgemässe Modifikation ist insbesondere bei der Herstellung von kleineren Behälter von Vorteil, die beispielsweise nur ein maximales Volumen von etwa 50 ml bis etwa 500 ml aufweisen und eine entsprechend geringe Höhe besitzen. Die axiale Anordnung der Blasformkavitäten für die Einzelbehälter ist derart gewählt, dass die Höhe der Blasformwerkzeuganordnung einer vorgegebenen Extrusionsblasmaschine nicht verändert aber optimal ausgenutzt wird. So ist bei verhältnismässig geringen Mehrkosten für das Blasformwerkzeug in einen Fertigungszyklus eine deutlich grössere Anzahl von Behältern herstellbar. Dadurch können die Herstellkosten je Einzelbehälter deutlich verringert werden.

Eine zweckmässige Variante der Erfindung sieht vor, dass der extrudierte Kunststoffschlauch in einen Formhohlraum eingelegt wird, der mit drei axial untereinander angeordneten Blasformkavitäten ausgestattet ist. Diese Variante ist technisch relativ einfach beherrschbar und liefert bei nur geringfügig erhöhtem Grundaufwand eine gegenüber bekannten Verfahren deutlich erhöhte Produktionsrate an fertig geblasenen Kunststoffbehältern.

In einer Variante des erfindungsgemässen Verfahrens ist der Kunststoffschlauch während eines gesamten Herstellungszyklusses, d.h. während eines gesamten Extrusions- und Blaszyklusses, an gegenüberliegenden Seiten der Blasformwerkzeuganordnung kontinuierlich gehalten. Dabei ist der Kunststoffschlauch permanent geführt, und Fehllagen können vermieden werden. Das Aufblasen des in den axial hintereinander angeordneten Blasformkavitäten befindlichen Kunststoffschlauchs erfolgt unmittelbar nach der Beschickung der Blasformkavität mit dem extrudierten Kunststoffschlauch. Der Kunststoffschlauch ist während des gesamten Extrusions- und Blaszyklusses in einer definierten Lage gehalten und kann nicht mehr um seine Achse pendeln. Der Extruderkopf und die Blasformwerkzeuganordnung verbleiben während des gesamten Extrusions- und Blasvorgangs in einer vorgebbaren und justierbaren, geometrischen Lagebeziehung, und der Kunststoffschlauch kann immer optimal übernommen werden. Dadurch wird auch bei komplizierteren Geometrien der Blasformkavitäten die Gefahr eines unbeabsichtigten Einklemmens des Kunststoffschlauchs verringert. Die erfindungsgemässe Verfahrensführung erlaubt es, bei Bedarf die Lage des extrudierten Kunststoffschlauch in Bezug auf die Ausrichtung der Blasformkavitäten gezielt zu verändern, um speziellen geometrischen Anforderungen Rechnung zu tragen.

In einer vorteilhaften Variante des erfindungsgemässen Verfahrens wird der Kunststoffschlauch erst nach dem vollständigen Aufblasen der Kunststoffbehälter abgetrennt. Das Abtrennen kann durch kontrolliertes Abquetschen oder auch durch Abscheren erfolgen. Vorzugsweise wird dazu ein Trennmesser oder dergleichen eingesetzt. Diese Verfahrensvariante unterscheidet sich sowohl von dem Blasverfahren mit den bekannten Rad-Blasmaschinen, bei denen der Schlauch nach der Übernahme durch das Blasformwerkzeug beim Weiterdrehen des Rades im wesentlichen unkontrolliert abgeschert wird, als auch von den kontinuierlichen und diskontinuierlichen Blasverfahren mit bekannten Extrusionsblasmaschinen, bei denen der Kunststoffschlauch vor dem eigentlichen Blasvorgang kontrolliert geschnitten wird. Zwar bedingt die erfindungsgemässe Verfahrensführung, dass der axial angeordnete Blasdorn für eine gewisse Zeit mit der Bewegung des Extruderkopfes und/oder der Extrusions- oder Übergabegeschwindigkeit des Kunststoffschlauchs an die Blasformwerkzeuganordnung synchronisiert werden muss. Durch diese einfache Massnahme ist aber sichergestellt, dass der Schlauch in jeder Phase des Herstellungszyklusses kontrolliert gehalten ist. Die Trennung des Kunststoffschlauchs erfolgt mit Vorteil an der dem Extruderkopf abgewandten Seite der Blasformwerkzeuganordnung. Dadurch ist vor dem Abtrennen die Führung des Schlauch über den auf dem freien Blasdorn befindlichen fertig geblasenen Hohlkörper und den Extruderkopf sichergestellt. Durch eine Anordnung der Trennstelle in unmittelbarer Nachbarschaft zur Mündung der einzelnen Blasformkavität kann der Schlauchmaterialabfall unabhängig von der Höhe der Blasformkavität immer möglichst klein gehalten werden.

Bezogen auf die Bewegungsrichtung des Kunststoffschlauchs ist die Blasformwerkzeugeinrichtung zwischen dem Extruderkopf und dem freien Blasdorn angordnet. Der freie Blasdorn wird durch eine Mündung der einzelnen Blasformkavität eingefahren, die an der der Extrusionsdüse abgewandten Seite der Blasformwerkzeuganordnung angeordnet ist. Der Ausgang der Extrusionsdüse und die axiale Erstreckung des freien Blasdorns sind dabei derart angeordnet, dass sie im wesentlichen axial fluchten.

Bei einem kontinuierlichen Extrusionsblasverfahren wird der Kunststoffschlauch kontinuierlich aus der Extrusionsdüse des Extruderkopfes extrudiert. Nach der Übergabe des extrudierten Kunststoffschlauches an den mehrteiligen Formhohlraum der Blasformwerkzeuganorndung und während des gesamten Blasvorgangs wird der relative Abstand des Extruderkopfes von der Blasformwerkzeuganordnung vergrössert, damit er bei der weiteren Extrusion nicht gegen die Oberfläche der Blasformwerkzeuganordnung anläuft und der Schlauch in einer kontrollierten Ausrichtung gehalten werden kann. Dadurch wird dem Umstand Rechnung getragen, dass der Kunststoffschlauch kontinuierlich aus der Extrusionsdüse extrudiert wird, während der Aufblasvorgang in den Blasförmkavitäten der Blasformwerkzeuganordnung ein diskontinuierlicher Prozess ist.

Die relative Abstandsveränderung zwischen dem Extruderkopf und der Blasformwerkzeuganordnung erfolgt wenigstens mit einer Geschwindigkeit, die der Austrittsgeschwindigkeit des Kunststoffschlauchs aus der Extrusionsdüse entspricht. Dadurch ist sichergestellt, dass der extrudierte Schlauch nicht auf die Oberfläche der Blasformwerkzeuganordnung aufläuft. Bei der Wahl einer grösseren Geschwindigkeit der Abstandsveränderung als der Extrusionsgeschwindigkeit wird der bereichsweise in der Blasformwerkzeuganordnung eingeklemmte Kunststoffschlauch gleichsam aus dem Düsenwerkzeug gezogen. Dadurch kann beispielsweise die Wandstärke des extrudierten Kunststoffschlauchs gezielt verändert werden. Es kann somit auch mit einem relativ grossen Düsenspalt ein dünnwandiger Schlauch erzeugt werden. Dies hat zum einen den Vorteil, dass trotz hohem Durchsatz der Druck im Extruderkopf vergleichsweise gering gehalten werden kann, und zum anderen die Dissipation und somit die Temperaturerhöhung im Schlauch geringer wird. Ein weiterer Vorteil besteht darin, dass auch bei der Verarbeitung von stark quellenden Materialien ein dünnwandiger Schlauch erzeugt werden kann, da aufgrund des grösseren Düsenspaltes und der damit verbundenen geringeren Scherung die Gefahr eines Schmelzebruchs verringert ist. Es kann auch vorgesehen sein, die Relativgeschwindigkeiten zwischen dem Extruderkopf und dem freien Blasdorn bzw. der Blasform während des kontinuierlichen Schlauchaustritts laufend gemäss einem Dehnungsprogramm zu verändern, um die Schlauchwandstärke im gewünschten Ausmass zu beeinflussen.

Zur Erzielung der Abstandsveränderung zwischen dem Extruderkopf und der Blasformwerkzeuganordnung besteht die Möglichkeit, den Extruderkopf oder die Blasformwerkzeuganordnung weg zu bewegen oder eine Kombination beider Bewegungen durchzuführen. Die Verstellung nur eines der beiden Geräteteile vereinfacht den konstruktiven Aufbau und die Steuerung der Bewegungsabläufe. Aus konstruktiven Überlegungen erweist es sich dabei als zweckmässig, wenn die Abstandsveränderung nur durch ein Wegbewegen des Extruderkopfes gegenüber der bezüglich ihrer Lage stationären Blasformwerkzeuganordnung erfolgt. Einerseits besteht im Bereich des Extruderkopfes mehr Raum für die Anbringung der Hubmittel. Andererseits ist es von Vorteil für die Zustellung des axialen Blasdorns, wenn die Blasformwerkzeuganordnung während des gesamten Blaszyklusses ihre Position im wesentlichen unverändert beibehält. Die Blasformwerkzeuganordnung muss zur Aufnahme des Schlauchabschnitts in den Blasformkavitäten nur eine Öffnungs- und Schliessbewegung ausführen. Diese Vorgänge sind einfacher und exakter steuerbar, wenn die Blasformwerkzeuganordnung keine weitere Bewegung ausführt.

Bei einem diskontinuierlichen Blasverfahren wird der Kunststoffschlauch diskontinuierlich aus der Extrusionsdüse eines als Staukopf ausgebildeten Extruderkopfes in den Formhohlraum der Blasformwerkzeuganordnung ausgestossen. Während des Ausstossens des Kunststoffschlauchs wird der Abstand axialen des Blasdorns vom Staukopf vergrössert. Der Aufbau der Extrusionsblasmaschine für das diskontinuierliche Verfahren entspricht weitgehend demjenigen der kontinuierlichen Maschinen. Zum Unterschied von den bekannten diskontinuierlichen Verfahren wird jedoch der Schlauch während des Herstellungsprozesses permanent gehalten und kontrolliert geführt. Dadurch wird ein unkontrolliertes Pendeln des Schlauches verhindert. Ausserdem kann das Halten des Schlauches bei Bedarf auch für eine kontrollierte Dehnung oder Lageveränderung desselben eingesetzt werden. Auch bei dem diskontinuierlichen Verfahren muss verhindert werden, dass der Schlauch auf die Oberfläche der Blasformwerkzeuganordnung aufläuft. Dazu wird die Geschwindigkeit der Abstandsveränderung des freien Blasdorns vom Staukopf gleich oder grösser eingestellt als die Ausstossgeschwindigkeit des Kunststoffschlauchs aus der Extrusionsdüse.

Das erfindungsgemässe Verfahren, bei dem der Kunststoffschlauch während eines gesamten Herstellungszyklusses kontrolliert geführt ist, erlaubt eine Verfahrensführung mit einer praktisch beliebigen Bewegungsrichtung des Kunststoffschlauchs. Während die bekannten Verfahren im wesentlichen auf eine vertikale Extrusionsrichtung des Kunststoffschlauchs beschränkt sind, ermöglicht die Führung des Schlauchs auch eine schräge, ja sogar eine horizontale Ausrichtung. Aus Gründen der Kompatibilität mit bestehenden Maschinen wird jedoch eine axiale Ausrichtung bevorzugt. Eine axial ausgerichtete Anordnung des Extruderkopfes, der Blasformwerkzeuganordnung und des freien Blasdorns erlaubt eine relativ einfache Steuerung der axialen Bewegungskomponenten. Mit Vorteil sind dabei die Austrittsgeschwindigkeit des Kunststoffschlauchs, die Extruderkopfbewegung, eine Verstellbewegung der Weite der Extrusionsdüse, die Blasdornbewegung und die Öffnungs- bzw. Schliessbewegung der Blasformwerkzeuganordnung individuell und aufeinander abgestimmt einstellbar. Dies erlaubt die Umsetzung optimierter Bewegungsabläufe, die auf die Erfordernisse des zu blasenden Behältnisses abgestimmt sind, ohne dadurch am Gesamtkonzept des erfindungsgemässen Verfahrens Änderungen vornehmen zu müssen. Beispielsweise kann vorgesehen sein, dass der Kunststoffschlauch während eines Herstellungszyklusses schräg gestellt wird, um spezielle Geometrien von Blasformkavitäten optimal bedienen zu können und spezielle Behältergeometrien herzustellen.

In einer zweckmässigen Ausführungsvariante der Erfindung umfasst die Blasformwerkzeuganordnung wenigstens zwei voneinander trennbare Formteile, die zum Öffnen und Schliessen des Blasformwerkzeugs im wesentlichen senkrecht zur Extrusionsrichtung aus einer Offen-Endstellung in eine Geschlossen-Endstellung und umgekehrt bewegt werden. Bei einer in ihrer Lage fixierten Blasformwerkzeuganordnung können die Stellmittel für den Öffnungs- und Schliessvorgang gleichfalls ortsfest angeordnet sein. Der Verzicht auf eine zusätzliche Bewegungskomponente vereinfacht den mechanischen Aufbau und trägt auch dazu bei, den Steuerungsaufwand für die kontrollierten Bewegungen der Formteile zu reduzieren.

Die Vorteile des Verfahrens wurden am Beispiel eines Extruderkopfes mit nur einer Extrusionsdüse und einer Blasformwerkzeuganordnung mit nur einem aus mehreren axial hintereinander angeordneten Blasformkavitäten zusammengesetzten Formhohlraum erläutert. Die Blasformwerkzeuganordnung kann beispielsweise auch eine Anordnung von Werkzeugen mit mehreren Formhohlräumen sein, die jeweils eine Anzahl von axial untereinander angeordneten Blasformkavitäten aufweisen. In einer zweckmässigen Verfahrensvariante werden ein Extruderkopf mit einem Mehrfachextrusionsdüsenwerkzeug und eine Blasformwerkzeuganordnung eingesetzt, welche mit einer korrespondierenden Anzahl von Formhohlräumen ausgestattet ist. Auf diese Weise ist in einem Blaszyklus bei gleichbleibenden Maschinen- und Werkzeugparametern eine grössere Anzahl von Kunststoffbehältern, beispielsweise Kunststoffflaschen, erzeugbar. Dadurch wird der Durchsatz erhöht, und die Rentabilität einer Mehrfachblasformwerkzeuganordnung kann noch weiter verbessert werden.

Eine vorteilhafte Verfahrensvariante sieht vor, dass die aufgeblasenen Kunststoffbehälter zum Entformen mit wenigstens einem gegenüber der Forminnenwandung lateral ausfahrbaren Ausstosser beaufschlagt werden. Der Ausstosser wird dabei derart auf die fertig geblasenen Behälter zugestellt, dass diese im Bereich der aneinandergrenzenden Mündungen des spiegelsymmetrisch angeordneten Paars von Blasformkavitäten vom Ausstosser berührt werden. Dies hat den Vorteil, dass Druckstellen des Ausstossers in einem verlorenen Bereich auftreten, der von den beiden, mit den Mündungen zusammenhängenden Behältern abgetrennt wird. An den fertigen Behältern treten daher mit Sicherheit keine Abdrücke von den Ausstossern auf.

Eine erfindungsgemäss ausgebildete Extrusionsblasmaschine zur Herstellung von Kunststoffbehältern, insbesondere von Kunststoffflaschen, besitzt einen in einem Geräterahmen angeordneten Extruderkopf mit wenigstens einer Extrusionsdüse, einer Blasformwerkzeuganordnung mit wenigstens einem Formhohlraum, und im besonderen mit wenigstens einem Blasdorn. Der Formhohlraum weist mehrere axial untereinander angeordnete Blasformkavitäten auf, wobei jeweils zwei der Blasformkavitäten spiegelsymmetrisch zueinander und an ihren Mündungsbereichen zusammenhängend angeordnet sind und eine einzelne Blasformkavität durch einen Abquetschbereich von einem Bodenabschnitt der benachbarten Blasformkavität getrennt ist und eine Mündung an einer Aussenfläche der Blasformwerkzeuganordnung aufweist. Die Exrrusionsblasmaschine besitzt eine Anzahl von geführten Blasdornen, die der Anzahl der paarweise spiegelsymmetrisch zueinander angeordneten Blasformkavitäten entspricht. Die geführten Blasdorne sind in Bohrungen der Blasformwerkzeuganordnung lateral verschiebbar sind und jeweils im Bereich der aneinandergrenzenden Mündungen in die beiden zusammenhängenden Blasformkavitäten einfahrbar sind, um die dort eingelegen Abschnitte des extrudierten Kunststoffschlauchs gemäss den Blasformkavitäten aufzublasen. Zusätzlich ist ein weiterer, freier Blasdorn vorgesehen, der axial in die Mündung der einzelnen Blasformkavität einfahrbar ist, um den dort befindlichen Abschnitt des Kunststoffschlauchs aufzublasen. Die Vorrichtung weist Mittel zum Entformen der aufgeblasenen Behälter auf.

Die erfindungsgemässe Extrusionsblasmaschine vereint die Konstruktionsprinzipe von Anlagen mit innerhalb der Blasformwerkzeuganordnung verschiebbaren geführten Blasdornen und Anlagen mit einem axial zustellbaren, freien Blasdorn. Beide Prinzipe sind erprobt und bewährt. Die erfindungsgemässe Extrusionsblasmaschine erlaubt somit bei vergleichsweise geringem zusätzlichen konstruktivem Aufwand einen deutlich grösseren Ausstoss von je Zeiteinheit geblasenen Kunststoffbehältern.

Aus konstruktiven Überlegungen und wegen des relativ geringen zusätzlichen Aufwands erweist sich eine Extrusionsblasmaschine von Vorteil, deren Blasformwerkzeuganordnung einen Formhohlraum mit drei axial untereinander angeordneten Blasformkavitäten aufweist.

Mit Vorteil weist die Blasformwerkzeuganordnung wenigstens einen Ausstosser auf, der zum Entformen der aufgeblasenen Kunststoffbehälter lateral gegenüber der Forminnenwandung ausfahrbar ist. Der Ausstosser ist derart angeordnet, dass er beim Ausstossen die Behälter im Bereich der aneinandergrenzenden Mündungen des spiegelsymmetrisch angeordneten Paars von Blasformkavitäten berührt. Vorzugsweise sind zwei Ausstosser vorgesehen, die einander gegenüberliegend jeweils in einer der Formhälften der Blasformwerkzeuganordnung angeordnet sind. Die Anordnung des bzw. der Ausstosser(s) hat den Vorteil, dass Druckstellen nur in einem verlorenen Bereich auftreten, der von den beiden, mit den Mündungen zusammenhängenden Behältern abgetrennt wird. An den fertigen Behältern sind daher mit Sicherheit keine Abdrücke von den Ausstossern feststellbar.

Eine Variante der Extrusionsblasvorrichtung weist an gegenüberliegenden Seiten der Blasformwerkzeuganordnung Halteeinrichtungen für den Kunststoffschlauch auf. Durch das Vorsehen von Halteeinrichtungen zu beiden Seiten der Blasformwerkzeuganordnung ist der Kunststoffschlauch während des gesamten Herstellungszyklusses eines Behälters kontinuierlich gehalten und geführt. Fehllagen des Kunststoffschlauchs konnen so vermieden werden. Falls es erforderlich erscheint, kann die Lage des Schlauchs aber auch gezielt gegenüber der Extrusionsrichtung verändert werden. Auf diese Weise kann beispielsweise auch den Anforderungen von komplizierteren Behältergeometrien-Rechnung getragen werden. Das Aufblasen der in den Blasformkavitäten befindlichen Abschnitte des Kunststoffschlauchs erfolgt unmittelbar nach der Beschickung mit dem extrudierten Kunststoffschlauch. Der Kunststoffschlauch ist während des gesamten. Herstellungszyklusses in einer definierten Lage fixiert und kann nicht mehr um seine Achse pendeln. Der Extruderkopf und die Blasformwerkzeuganordnung verbleiben während des gesamten Extrusions- und Blasvorgangs im wesentlichen in einer vorgebbaren und justierbaren, geometrischen Lagebeziehung, und der Kunststoffschlauch kann immer optimal übernommen werden. Dadurch wird auch bei komplizierteren Geometrien der Blasformkavität die Gefahr eines unbeabsichtigten Einklemmens des Kunststoffschlauchs verringert.

Die Haltevorrichtungen für den Schlauch werden einerseits durch den freien Blasdorn und andererseits durch den Extruderkopf gebildet. Durch den Einsatz bereits vorhandener Maschinenkomponenten für die Haltefunktion können der Aufbau einfach und die Bauweise kompakt gehalten werden.

Bei einer auch aus Platzgründen zweckmässigen Anordnung ist die Blasformwerkzeuganordnung zwischen dem Extruderkopf und dem freien Blasdorn angeordnet. Die einzelne Blasformkavität weist eine Mündung an der der Extrusionsdüse abgewandten Seite der Blasformwerkzeuganordnung auf, in welche der freie Blasdorn einfahrbar ist. Bei dieser Anordnung sind die Verstell- und Zustellbewegungen der Gerätekomponenten im wesentlichen auf Bewegungen entlang der Bewegungsrichtung des Kunststoffschlauchs bzw. im wesentlichen senkrecht dazu beschränkt. Dies führt zu geringeren mechanischen Beanspruchungen und verringert die im Betrieb auftretenden Vibrationen und Erschütterungen.

Um zu verhindern, dass während des Extrusions- und Blaszyklusses der Kunststoffschlauch auf Gerätekomponenten aufläuft oder durchhängt, sind Stellmittel vorgesehen, mit denen der relative Abstand zwischen dem Extruderkopf und der Blasformwerkzeuganordnung verstellbar ist. Eine vorteilhafte Variante sieht dabei vor, dass der Extruderkopf mit den Stellmitteln verbunden ist und gegenüber der stationären Blasformwerkzeuganordnung abstandsverstellbar ist. Diese Anordnung hat den Vorteil, dass an der Blasformwerkzeuganordnung im wesentlichen nur Vorkehrungen für das Öffnen und Schliessen der Formteile sowie für die Zustellung des internen geführten Blasdorns und des Ausstossers vorgesehen sein müssen. Dies vereinfacht die Bewegungsabläufe und den Steuerungsaufwand.

Der Extruderkopf kann für eine kontinuierliche Extrusion des Kunststoffschlauchs ausgebildet sein. Bei dieser Ausführungsvariante erfolgt die Abstandsveränderung zwischen dem Extruderkopf und der Blasformwerkzeuganordnung wenigstens mit der Extrusionsgeschwindigkeit des Kunststoffschlauchs. In einer alternativen Ausführungsvariante der Erfindung ist der Extruderkopf als ein Staukopf zum diskontinuierlichen Ausstossen des Kunststoffschlauchs ausgebildet. Bei dieser Variante ist der freie Blasdorn zumindest mit der Ausstossgeschwindigkeit des Kunststoffschlauchs gegenüber der Blasformwerkzeuganordnung abstandsverstellbar.

Nachdem an beiden Seiten der Blasformwerkzeuganordnung Halteeinrichtungen für den Kunststoffschlauch vorgesehen sind, kann die Ausrichtung der Extrusionsdüse, der Blasformwerzeuganordung und des freien Blasdorns beliebig gewählt werden. Aus Gründen der Kompatibilität mit bereits bestehenden Geräten und Anlagenkomponenten wird aber eine Anordnung bevorzugt, bei der der Extruderkopf eine im wesentlichen vertikal ausgerichtete Extrusionsdüse aufweist und die Blasformwerkzeuganordnung sowie der freie Blasdorn vertikal untereinander angeordnet sind. Die vertikale Anordnung macht sich auch die in gewissem Ausmass stabilisierende Wirkung der Schwerkraft auf den extrudierten Kunststoffschlauch zu Nutze.

Die Blasformwerkzeuganordnung umfasst wenigstens zwei voneinander trennbare Formteile, die zum Öffnen und Schliessen im wesentlichen senkrecht zur Extrusionsrichtung des Kunststoffschlauchs aus einer Offen-Endstellung in eine Geschlossen-Endstellung und umgekehrt bewegbar sind. Bei einer hinsichtlich ihrer Lage fixierten Blasformwerkzeuganordnung können die Stellmittel für den Öffnungs- und Schliessvorgang gleichfalls ortsfest angeordnet sein. Der Verzicht auf eine zusätzliche Bewegungskomponente vereinfacht den mechanischen Aufbau und trägt auch dazu bei, den Steuerungsaufwand für die kontrollierten Bewegungen der Formteile zu reduzieren.

Aus Gründen des höheren Durchsatzes erweist es sich von Vorteil, wenn der Extruderkopf mehrere Extrusionsdüsen aufweist und die Blasformwerkzeuganordnung mit einer korrespondierenden Anzahl von Formhohlräumen mit einer Anzahl von untereinander angeordneten Blasformkavitäten ausgestattet ist. Abgesehen von dem höheren Durchsatz und der verbesserten Rentabilität des Mehrfachblasformwerkzeugs ist bei dieser Ausführungsvariante in einem Blaszyklus eine grössere Anzuahl von Kunststoffbehältern, beispielsweise Kunststoffflaschen, mit gleichbleibenden Maschinen- und Werkzeugparametern erzeugbar. Dies hat Vorteile hinsichtlich der Gleichmässigkeit der Qualität der erzeugten Produkte.

Im folgenden wird die Erfindung unter Bezugnahme auf die nicht massstabsgetreuen, schematischen Darstellungen näher erläutert. Es zeigen:
Fig. 1 eine Prinzipdarstellung einer Extrusionsblasmaschine des Stand der Technik;
Fig. 2 ein Schema einer erfindungsgemässen Anordnung eines Extruderkopfes, eines Formwerkzeugs und eines Blasdorns;
Figs. 3 -11 schematische Darstellungen zur Erläuterung Herstellverfahrens mit auf die Extruderdüse axial ausgerichtetem Blasformwerkzeug und der einzelnen Blasformkavität zugeordnetem Blasdorn;
Fig.12 eine erfindungsgemäss ausgebildete Blasformwerkzeuganordnung mit drei axial untereinander angeordneten Blasformkavitäten im geöffneten Zustand;
Fig.13 die Blasformwerkzeuganordnung gemäss Fig.12 mit angedeuteten Ausstossern; und
Fig.14 eine Schnittdarstellung der Blasformwerkzeuganordnung gemäss der Schnittlinie A-A- in Fig.13.

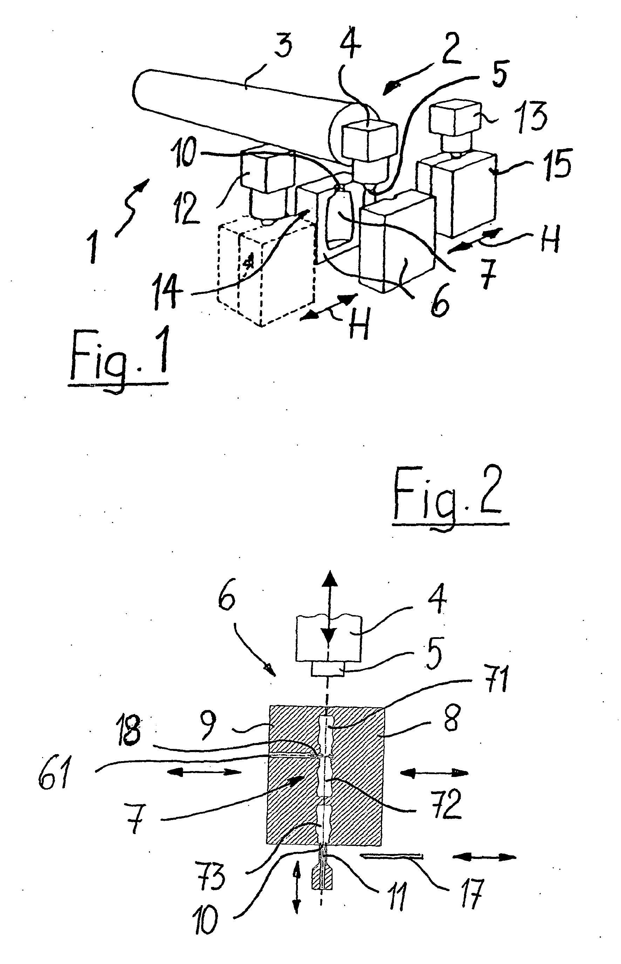

Die in Fig.1 nur im Prinzip dargestellte Extrusionsblasmaschine ist gesamthaft mit dem Bezugzeichen 1 versehen. Der Aufbau derartiger Langhub-Extrusionblasmaschinen ist hinlänglich bekannt und beispielsweise in "Blow molding handbook, edited by Donald V. Rosato and Dominick V. Rosato,1989, ISBN 1-56990-089-2, Library of Congress Catalogue Card Number 88-016270" beschrieben. Die Darstellung in Fig. 1 beschränkt sich daher auf die für das Verständnis unbedingt erforderlichen Bestandteile der Extrusionsblasmaschine 1. Bei dem dargestellten Ausführungsbeispiel handelt es sich um eine Zweistationenblasmaschine, wie sie auch von der Anmelderin angeboten wird. Sie weist eine Extrusionseinheit 2 und zwei Blasstationen 12, 13 auf. Die Extrusionseinheit 2 umfasst einen Extruder 3 für Kunststoffgranulat und einen damit verbundenen Extruderkopf 4, der wenigstens eine Extrusionsdüse 5 aufweist. Die Blasstationen 12,13 besitzen jeweils einen Blaskopf mit einem Blasdorn. Jede Blastation 12,13 ist mit einem Blasformtisch 14, 15 ausgestattet, in dem Blasformwerkzeuge 6 montiert sind. Die Blasformwerkzeuge 6 umschliessen jeweils einen Formhohlraum 7, der die Blasformkavität für den herzustellenden Hohlkörper, beispielsweise eine Flasche, bildet. Die Blasformkavitäten 7 besitzen an ihrer dem Extruderkopf 4 zugewandten Oberseite eine Mündung 10. Die Blasformtische 14, 15 sind abwechselnd aus ihren seitlichen Endpositionen in den Blasstationen 12,13 in eine Position verschiebbar; in der die Mündung des Blasformwerkzeugs 6 mit dem Ausgang der Extrusionsdüse 5 axial fluchtet. Die seitliche Verschiebung der Blasformtische 14, 15 erfolgt dabei im wesentlichen senkrecht zur Längserstreckung des Extruders 3.

Das über den Extruder 3 zugeführten Kunststoffgranulat wird im Extruder 3 und/oder im Extruderkopf 4 aufgeschmolzen und von der Extrusionsdüse 5 als endloser Schlauch extrudiert. Der Schlauch kann ein- oder mehrschichtig extrudiert werden. Dazu können auch noch weitere Extruder vorgesehen sein, welche die erforderlichen unterschiedlichen Kunststoffmaterialien zum Extruderkopf 4 transportieren. Die Blasformtische 14,15 mit den Blasformwerkzeugen 6 werden abwechselnd aus ihren Endpositionen in den Blasstationen 12, 13 seitlich unter den Extruderkopf 4 bewegt, die Blasformwerkzeuge 6 geöffnet und ein Stück des extrudierten Schlauchs abgeholt. Danach wird der jeweilige Blasformtisch 14,15 wieder in seine Endposition in der Blasstation 12 bzw.13 zurückbewegt. Dort wird dann mit Hilfe eines durch die Mündung 8 in die Kavität 7 eingefahrenen Blasdorns der Hohlkörper aufgeblasen. Der fertige Hohlkörper wird ausgestossen und der Zyklus wiederholt. Während in der einen Blasformstation 12 ein Schlauch aufgeblasen wird, wird der Blasformtisch 15 der zweiten Blasstation 13 seitlich unter den Extrusionkopf 4 bewegt, um ein weiteres Stück des extrudierten Schlauchs abzuholen. Auf diese Weise ist ein kontinuierlicher Betrieb ermöglicht.

Fig. 2 zeigt schematisch eine Anordnung der erfindungswesentlichen Gerätekomponenten. Dabei wurden die Bezeichnungen aus Fig.1 beibehalten, um einen direkten Vergleich der Anlagen zu ermöglichen. Mit dem Bezugszeichen 4 ist wiederum der Extruderkopf bezeichnet, der die Extrusionsdüse 5 aufweist. Das Bezugszeichen 6 steht für die Blasformwerkzeuganordnung der Extrusionsblasvorrichtung, welches im dargestellten Ausführungsbeispiel zwei Blasformhälften 8, 9 umfasst. Die beiden Blasformhälften 8, 9 begrenzen den Formhohlraum 7, der erfindungsgemäss aus mehreren axial untereinander angeordneten Blasformkavitäten 71, 72, 73 zusammengesetzt ist. Dabei sind zwei der gemäss dem dargestellten Ausführungsbeispiel insgesamt drei Blasformkavitäten 71, 72 derart spiegelsymmetrisch zueinander angeordnet, dass ihre Mündungen aneinandergrenzen. Eine dritte, einzelne Blasformkavität 73 ist durch einen Abquetschbereich vom Boden der vorhergehenden Blasformkavität 72 getrennt und besitzt eine Mündung 10 an der von der Extruderdüse 5 abgewandten Seite der Blasformwerkzeuganordnung 6. Geht man von der praxisgerechten Anordnung der Gerätekomponenten aus, dann befindet sich die Mündung 10 der einzelnen Blasformkavität 73 an der Unterseite der Blasformwerkzeuganordnung 6. Ein mit dem Bezugszeichen 11 bezeichneter sogenannter freier Blasdorn ist in die Mündung 10 der einzelnen Blasformkavität einfahrbar. Die Blasformwerkzeuganordnung 6 weist eine Bohrung 61 auf, in der ein geführter Blasdorn 18 lateral verschiebbar ist. Der lateral verschiebbare Blasdorn 18 ist derart angeordnet, dass er genau im Bereich der aneinandergrenzenden Mündungen des spiegelsymmetrischen Blasformkavitätenpaars 71, 72 zustellbar ist.

Der Extruderkopf 4 und die Blasformwerkzeuganordnung 6 sind derart angeordnet, dass die Achse der Blasformkavität 7 und der Ausgang der Extrusionsdüse 5 am Extruderkopf 4 miteinander axial fluchten. Bei dem dargestellten Ausführungsbeispiel ist auch der freie Blasdorn 11 derart angeordnet, das er mit der Achse des dreiteilig aufgebauten Formhohlraums 7 fluchtet. Dies ist jedoch kein zwingendes Erfordernis. Es versteht sich, dass bei einer exzentrisch angeordneten Mündung der einzelnen Blasformkavität 73 der freie Blasdorn 11 auch entsprechend seitlich versetzt sein kann. Mit dem Bezugszeichen 17 ist noch ein Messer angedeutet, dass zur Abtrennung der fertig geblasenen Hohlkörperanordnung vom extrudierten Schaluch dient.

Die in Fig. 2 eingezeichneten Pfeile deuten die Verstellbarkeit der einzelnen Gerätekomponenten an. So ist der Extruderkopf 4 im wesentlichen nur bezüglich seiner Höhe verstellbar, um während des Extrusions- und Blasvorgangs den Abstand zur Blasformwerkzeuganordnung 6 zu verändern. Für die erforderliche Grundeinstellung und Feinjustierung weist er jedoch alle Freiheitsgrade auf. Die Blasformhälften 8, 9 der Blasformwerkzeuganordnung 6 sind nur lateral aus einer Offen-Endstellung in eine Geschlossen-Endstellung und umgekehrt verstellbar. In einer Variante der Erfindung kann auch eine Höhenverstellbarkeit für die Blasformwerkzeuganordnung 6 vorgesehen sein. Der in der Bohrung 61 geführte Blasdorn 18 ist auf Höhe des Mündungsbereichs des spiegelsymmetrischen Blasformkavitätenpaars 71, 72 angeordnet. Der freie Blasdorn 11 ist höhenverstellbar, um in die Mündung 10 der einzelnen Blasformkavität 73 eingefahren und wieder zurückgezogen werden zu können.

Die in Fig. 2 dargestellte Blasformwerkzeuganordnung mit mehreren, insbesondere drei, axial untereinander angeordneten Blasformkavitäten kann beispielsweise auch bei einer Extrusionsblasvorrichtung gemäss Fig.1 vorgesehen sein. In diesem Fall könnte die dritte, einzelne Blasformkavität ihre Mündung auch an der Oberseite der Blasformwerkzeuganordnung aufweisen. Der für die dritte Blasformkavität vorgesehene freie Blasdorn wird dann von oben auf die Mündung der dritten Blasformkavität zugestellt. Die beiden mit ihren Mündungen zusammenhängenden Blasformkavitäten werden von einem innerhalb einer Bohrung der Blasformwerkzeuganordnung in der Höhe des Mündungsbereichs der paarweise angeordneten Blasformkavitäten lateral zustellbaren, geführten Blasdorn beaufschlagt.

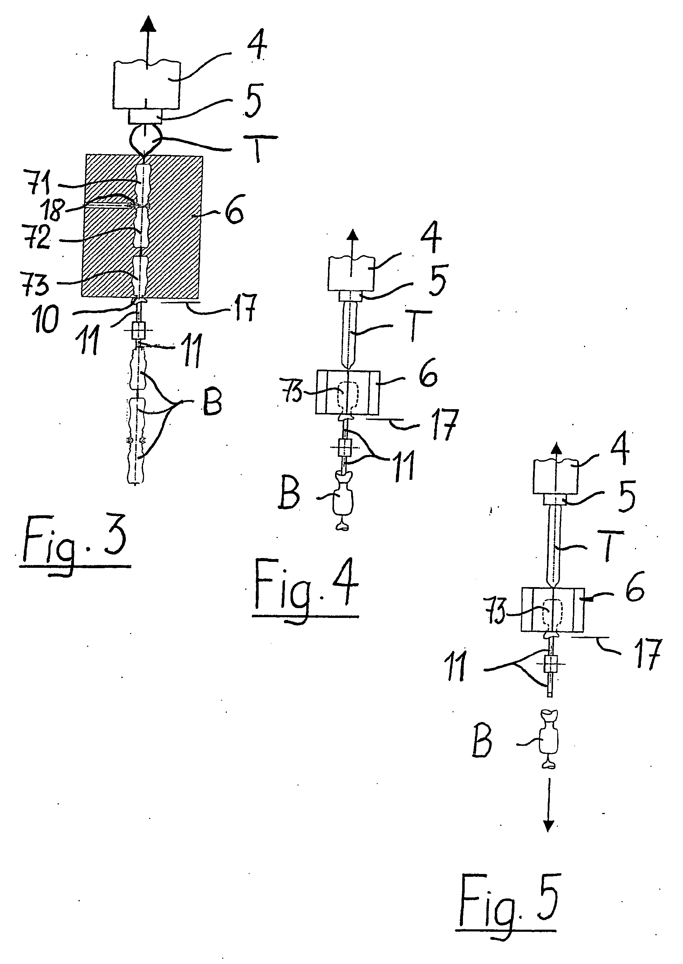

Die Darstellungen in Figs. 3 bis 11 dienen zur Erläuterung des Verfahrens zur Produktion eines Kunststoffhohlkörpers in einer axial ausgerichteten Anordnung.

Fig. 3 zeigt den Herstellungszyklus beginnend mit dem Zustand, in dem die Blasformwerkzeuganordnung 6 geschlossen ist. Der kontinuierlich aus der Extrusionsdüse 5 des Extruderkopfes 4 extrudierte Schlauch T ist mit T angedeutet. Zwei sogenannte freie Blasdorne 11 sind auf einer drehbaren Blasdornhalterung 16 montiert und abwechselnd in die Mündung 10 der einzelnen Blasformkavität 73 einfahrbar. Das Bezugszeichen 17 steht für das in diesem Zustand inaktive Messer. In dem in Fig. 3 dargestellten Zustand werden die in den Blasformkavitäten 71, 72 und 73 befindlichen Schlauchabschnitte aufgeblasen. Die in den beiden spiegelsymmetrischen Bläsformkavitäten 71, 72 befindlichen Schlaüchabschritte werden gemeinsam durch den lateral zustellbaren Blasdorn 18 aufgeblasen.

Während in Fig. 3 eine Blasformwerkzeuganordnung 6 mit drei untereinander angeordneten Blasformkavitäten 71, 72, 73 dargestellt ist, zeigen die vereinfachten Prinzipdarstellungen in den Fig. 4 bis Fig.11 die Blasformwerkzeuganordnung 6 jeweils nur mit einer einzelnen Blasformkavität. Insbesondere ist dabei die einzelne Blasformkavität 73 der Blasformwerkzeuganordnung 6 aus Fig. 2 dargestellt, die jeweils stellvertretend für die Anordnung von drei, oder auch mehreren, Blasformkavitäten steht, welche den gesamten Formhohlraum ausmachen. Die Anzahl der paarweise vorgesehenen spiegelsymmetrischen Blasformkavitäten ist für den nachstehend geschilderten Ablauf des Extrusions-und Blasverfahrens nicht entscheidend. Es versteht sich jedoch, dass der Formhohlraum der Blasformwerkzeuganordnung 6 immer auch wenigstens die beiden spiegelsymmetrisch angeordneten Blasformkavitäten 71, 72, die gemäss Fig. 2 nach oben an die einzelne Blasformkavität 73 anschliessen und von dem in der Bohrung der Blasformwerkzeuganordnung lateral verschiebbaren, geführten Blasdorn beaufschlagt werden, aufweist.

Während des Blasvorgangs wird der Extruderkopf 4 kontinuierlich angehoben und der Höhenabstand zur Blasformwerkzeuganordnung 6 kontinuierlich vergrössert. Dies ist in Fig. 4 durch die Verlängerung des extrudierten Schlauchs T angedeutet. Wird der Extruderkopf mit einer Geschwindigkeit angehoben, die grösser ist als die Extrusionsgeschwindigkeit des Kunststoffschlauchs, wird der Schlauch aus der Extrusionsdüse herausgezogen und gedehnt, und seine Wandstärke verringert sich. Während des Anhebens des Extruderkopfes 4 kann bei Bedarf ein Wanddickenregelungsprogramm gefahren werden, bei dem durch Variation der Spaltweite der Extrusionsdüse die Wanddicke des Schlauchs im gewünschten Umfang verändert werden kann. Während des Anhebens des Extruderkopfes kann auch ein Stützluftprogramm gefahren werden. Am ausserhalb der einzelnen Blasformkavität 73 befindlichen zweiten freien Blasdorn 11 hängt noch die gemäss den Blasformkavitäten fertig geblasenen, zusammenhängenden Flasche B (Fig. 3). In dieser Position können sie beispielsweise noch einem nicht näher dargestellten Nachkühlvorgang oder anderen Nachbearbeitungen unterzogen werden. Im folgenden werden die zusammenhängenden Flaschen immer durch eine einzelne Flasche symbolisiert.

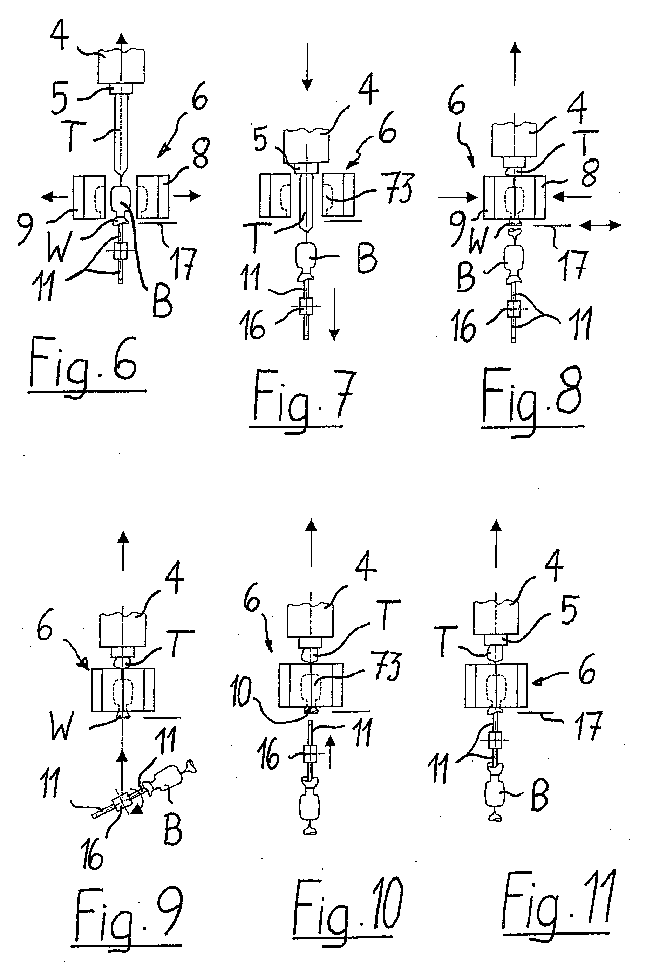

Das Ende des Blasvorgangs ist in Fig. 5 angedeutet. Der Extruderkopf 4 ist noch weiter von der Blasformwerkzeuganordnung 6 entfernt und wird weiter angehoben. Die in der einzelnen Blasformkavität 73 befindliche aufgeblasene Flasche und die spiegelsymmetrischen aufgeblasenen Flaschen werden durch die Blasformwerkzeuganordnung 6 entlüftet. Die am unteren freien Blasdorn 11 hängenden Flaschen B werden abgenommen. Nach diesem Vorgang werden die Blasformhälften 8, 9 der Blasformwerkzeuganordnung 6 geöffnet, was in Fig. 6 angedeutet ist. Der Extruderkopf 4 wird dabei immer noch angehoben. Nachdem die in den Blasformkavitäten aufgeblasenen Flaschen B völlig aus dem Formhohlraum entformt worden sind, wird die Bewegung des Extruderkopfes 4 gestoppt und umgekehrt. Wie in Fig. 7 dargestellt ist, wird der Extruderkopf 4 mit dem extrudierten Schlauchstück T und den damit noch verbundenen, fertig geblasenen Flaschen B nach unten in Richtung der Blasformwerkzeuganordnung 6 gefahren. Der an der Blasdornhalterung 16 montierte freie Blasdorn 11 wird gleichfalls abgesenkt.

Aus Figs. 6 und 7 ist deutlich ersichtlich, dass der extrudierte Schlauch T auch bei geöffneter Blasformwerkzeuganordnung 6 in einer axial definiert ausgerichteten Lage gehalten ist. Dadurch dass der Schlauch immer noch mit den fertig geblasenen Behältern B verbunden ist, ist der Schlauch einerseits von der Extrusionsdüse 6 und andererseits über den freien Blasdorn 11 fixiert. Dadurch wird eine Pendeln des Schlauchs T zuverlässig verhindert. Die Absenkgeschwindigkeit des Extrusionskopfes 4 und des freien Blasdorns 11 erfolgt mit Vorteil synchron und entspricht wenigstens der Extrusionsgeschwindigkeit des Schlauchs T. Durch einen vorgebbaren Unterschied der Absenkgeschwindigkeiten kann der kontinuierlich extrudierte Schlauch T im gewünschten Umfang gedehnt werden. Die axiale ausgerichtete Anordnung des Extruderkopfes 4, der Blasformwerkzeuganordnung 6 und des freien Blasdorns 11 erlaubt auch eine relativ einfache Steuerung der axialen Bewegungskomponenten. Mit Vorteil sind dabei die Austrittsgeschwindigkeit des Kunststoffschlauchs T, die Bewegung des freien Blasdorns 11 und eine Verstellbewegung der Weite der Extrusionsdüse 5 individuell und aufeinander abgestimmt einstellbar. Dies erlaubt die Umsetzung optimierter Bewegungsabläufe, die auf die Erfordernisse der zu blasenden Behältnisse B abgestimmt sind, ohne dadurch am Gesamtkonzept des axial ausgerichteten Verfahrens Änderungen vornehmen zu müssen.

Fig. 8 zeigt den Zustand, in dem die Blasdornhalterung 16 ihre tiefste Position erreicht hat. Nun werden die Hälften der Blasformwerkzeuganordnung 6 wieder geschlossen, um einen neuen Schlauchabschnitt in den untereinander angeordneten Blasformkavitäten einzuschliessen. Kurz bevor die Blasformwerkzeuganordnung 6 völlig geschlossen ist, wird das Messer 17 seitlich zugestellt, um die fertig geblasenen Flaschen B von dem aus der Mündung der einzelnen Blasformkavität ragenden Abfallstück zu trennen. Dies ist in Fig. 8 durch einen Doppelpfeil angedeutet. Der Extruderkopf 4 hat mittlerweile seine Bewegungsrichtung wieder umgekehrt und wird wieder angehoben. Nach dem Abtrennen wird die Blasdornhalterung 16 gedreht, um den zweiten freien Blasdorn 11 auf die Mündung der einzelnen Blasdornkavität auszurichten. Während des Drehens der Blasdornhalterung 16 kann diese bereits auf die Blasformwerkzeuganordnung 6 zugestellt werden. Die Drehung und die Höhenverstellung der Blasformhalterung 16 sind in Fig. 9 durch entsprechende Pfeile angedeutet. Während dieses Vorgangs wird der Extruderkopf 4 weiter angehoben. Fig. 10 zeigt den Zustand in dem der Drehvorgang der Blasdornhalterung 16 abgeschlossen ist und der freie Blasdorn 11 seine korrekte Hubposition erreicht hat. Danach wird er in die Mündung 10 der Blasformkavität 7 eingefahren. Dabei wird die spätere Öffnung der aufzublasenden Flasche kalibriert. Bereits während des Einfahrens des freien Blasdorns 11 in die einzelne Blasformkavität 73 kann mit dem Vorblasen begonnen werden. Der Extruderkopf 4 wird dabei weiter angehoben. In Fig.11 ist der freie Blasdorn 11 endgültig in die einzelne Blasformkavität der Blasformwerkzeuganordnung 6 eingefahren und der Produktionszyklus startet wieder von vorne. Die Darstellung in Fig. 11 entspricht dabei der Darstellung in Fig. 3.

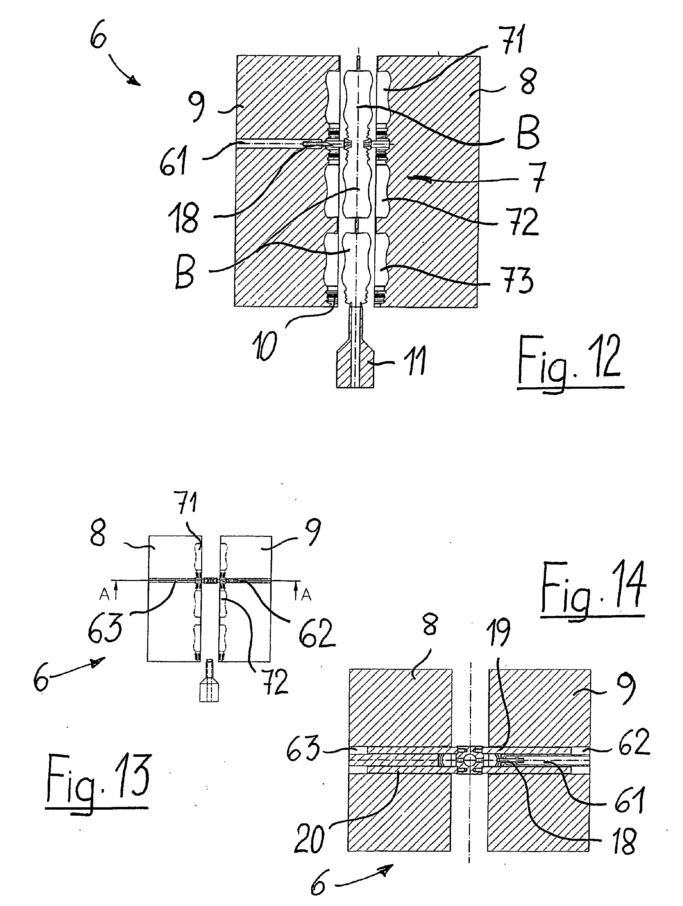

Fig.12 zeigt eine vergrösserte Darstellung der Blasformwerkzeuganordnung 6. Sie besteht aus zwei Formhälften 8, 9, die einen Formhohlraum 7 umschliessen. Der Formhohlraum 7 ist gemäss dem dargestellten Ausführungsbeispiel aus drei Blasformkavitäten 71, 72, 73 zusammengesetzt, die axial untereinander angeordnet sind. Die in der Darstellung beiden oberen Blasformkavitäten 71, 72 sind spiegelsymmetrisch zueinander angeordnet und hängen mit ihren Mündungsbereichen zusammen. Die dritte einzelene Blasformkavität 73 ist durch einen Abquetschbereich vom Boden der vorhergehenden Blasformkavität 72 getrennt. Sie besitzt ihre Mündung 10 an der Unterseite der Blasformwerkzeuganordnung 6. Ein in der einzelnen Blasformkavität 73 befindlicher Schlauchabschnitt wird über einen freien Blasdorn 11 aufgeblasen, der in die Mündung 10 der einzelnen Blasformkavität 73 einfahrbar ist. Die Schlauchabschnitte in den beiden mit ihren Mündungen zusammenhängenden Blasformkavitäten 71, 72 werden über einen in einer Bohrung 61 der Blasformwerkzeuganordnung 6 lateral verschiebbaren, geführten Blasdorn 18 aufgeblasen. Der geführte Blasdorn 18 ist dabei derart angeordnet, dass er den Kunststoffschlauch im Bereich der aneinandergrenzenden Mündungen durchsticht. Fig.12 zeigt die Formhälften 8, 9 im geöffneten Zustand. Die drei fertig geblasenen Flaschen B sind losgelöst von den Forminnenwänden dargestellt und sind auf dem freien Blasdorn 11 festgehalten. Die fertig geblasenen Kunststoffflaschen werden später an der Abquetschstelle zwischen den Böden der beiden unteren Flaschen und im Bereich der aneinandergrenzenden Mündungen der beiden oberen Flaschen getrennt. Dabei wird im Bereich der aneinandergrenzenden Mündungen ein Mittenstück abgetrennt. Die beispielsweise schematisch dargestellte Blaswerkzeuganordnung 6 weist einen Formhohlraum 7 auf, der aus drei Blasformkavitäten 71, 72, 73 zusammengesetzt ist. Es versteht sich, dass der Formhohlraum auch aus mehr als drei Blasformkavitäten zusammengesetzt sein kann. Auch kann die Reihenfolge der paarweise und einzeln vorgesehenen Blasformkavitäten geändert sein und die einzelne Blasformkavität ihre Mündung an der Oberseite der Blasformwerkzeuganordnung aufweisen.

Fig.13 und 14 zeigen, dass die Blasformwerkzeuganordnung 6 Ausstosser 19, 20 aufweist, die beim Öffnen der Formhälften 8, 9 gegenüber der Innenwandung ausfahrbar sind und die Entformung der fertig geblasenen Flaschen erleichtern. Die Ausstosser 19, 20 sind in Bohrungen 62, 63 in den Formhälften 8, 9 geführt und sind beispielsweise hydraulisch betätigbar. Die Anordnung der Ausstosser 19, 20 ist dabei derart, dass sie die fertig geblasenen Flaschen nur in einem Mittenbereich der aneinanderstossenden Mündungen der spiegelsymmetrischen Blasformkavitäten 71, 72 berühren. Der Mittenbereich zwischen den aneinanderstossenden Mündungen wird später abgetrennt. Dadurch sind an den fertig geblasenen Flaschen mit Sicherheit keine Druckstellen von den Ausstossern sichtbar.

Die Erfindung wirde in den schematischen Zeichungen am Beispiel eines Extruderkopfes mit nur einer Extrusionsdüse und einer Blasformwerkzeuganordnung mit nur einem Formhohlraum dargestellt. Es versteht sich, dass die geschilderte Anordnung und das geschilderte Verfahren auch bei Extrusionsblasvorrichtungen mit Mehrfachdüsenwerkzeugen und Mehrfachblasformwerkzeugen oder Anordnungen von Einfach- und/oder Mehrfachblasformwerkzeugen anwendbar ist. Die Zahl der Blasdorne ist dabei auf die Anzahl der Blasformkavitäten abgestimmt.

Die Erfindung ist am Beispiel eines kontinuierlichen Extrusionsblasverfahrens und einer entsprechend ausgebildeten Vorrichtung mit vertikaler Anordung des Extruderkopfes, der Blasformwerkzeuganordnung und der Blasdorne erläutert worden. Es versteht sich, dass die Anordung der Gerätekomponenten auch in horizontaler oder beliebiger Ausrichtung gemäss der Extrusionsrichtung erfolgen kann. Das erfindungsgemässe Verfahren ist auch bei einem diskontinuierlichen Extrusionsblasverfahren anwendbar und dementsprechend ist auch eine diskontinuierliche Extrusionsblasmaschine herstellbar.

## Patentansprüche

1. Verfahren zur Herstellung von Kunststoffbehältern, insbesondere von Kunststoffflaschen, in einem Extrusionsblasverfahren, bei dem ein von einem Extruderkopf (4) extrudierter Kunststoffschlauch (T) in einem vorgebbaren Takt in einen Formhohlraum (7) einer Blasformwerkzeuganordung (6) eingebracht wird, der eingelegte Kunststoffschlauch (T) durch Überdruck gemäss dem Formhohlraum aufgeblasen und dann entformt wird, wobei der extrudierte Kunststoffschlauch (T) in einen Formhohlraum (7) eingelegt wird, der aus mehreren axial untereinander angeordneten Blasformkavitäten (71, 72, 73) zusammengesetzt ist, wobei jeweils zwei der Blasformkavitäten (71, 72) spiegelsymmetrisch zueinander und an ihren Mündungsbereichen zusammenhängend angeordnet sind und eine einzelne Blasformkavität (73) durch einen Abquetschbereich von einem Bodenabschnitt der benachbarten Blasformkavität (72) getrennt ist und eine Mündung (10) an einer Aussenfläche der Blasformwerkzeuganordnung aufweist, **dadurch gekennzeichnet, dass**
- ein der Anzahl der paarweise spiegelsymmetrisch zueinander angeordneten Blasformkavitäten (71, 72) entsprechende Zahl von geführten Blasdornen (18) vorgesehen ist, die in Bohrungen (61) der Blasformwerkzeuganordnung (6) lateral verschiebbar sind und jeweils im Bereich der aneinandergrenzenden Mündungen in die beiden zusammenhängenden Blasformkavitäten (71, 72) eingefahren werden, um die dort eingelegen Abschnitte des extrudierten Kunststoffschlauchs (T) gemäss den Blasformkavitäten (71, 72) aufzublasen, während ein weiterer, freier Blasdorn (11) axial in die Mündung (10) der einzelnen Blasformkavität (73) eingefahren wird, um den dort befindlichen Abschnitt des Kunststoffschlauchs aufzublasen,
- und die gemäss den Blasformkavitäten (71, 72, 73) aufgeblasenen Behälter (B) entformt werden.

2. Verfahren nach Anspruch 1, **dadurch gekennzeichnet, dass** der extrudierte Kunststoffschlauch (T) in einen Formhohlraum (7) eingelegt wird, der mit drei axial untereinander angeordneten Blasformkavitäten (71, 72, 73) ausgestattet ist.

3. Verfahren nach Anspruch 1 oder 2, **dadurch gekennzeichnet, dass** der Kunststoffschlauch (T) während eines gesamten Extrusions- und Blaszyklusses an einander gegenüberliegenden Seiten der Blasformwerkzeuganordnung (6) kontinuierlich gehalten wird.

4. Verfahren nach Anspruch 3, **dadurch gekennzeichnet, dass** der Kunststoffschlauch (T) nach dem Aufblasen des Hohlkörpers (B) an der dem Extruderkopf (4) abgewandten Seite der Blasformwerkzeuganordnung (6) abgetrennt wird.

5. Verfahren nach Anspruch 3 oder 4, **dadurch gekennzeichnet, dass** die Blasformwerkzeuganordnung (6) bezogen auf die Bewegungsrichtung des Kunststoffschlauchs (T) zwischen dem Extruderkopf (4) und dem freien Blasdorn (11) angeordnet ist, welcher zum Aufblasen des Kunststoffschlauchs (T) in die Mündung (10) der einzelnen Blasformkavität (7) einfahrbar ist, die an der der Extrusionsdüse (5) abgewandten Seite der Blasformwerkzeuganordnung (6) angeordnet ist.

6. Verfahren nach einem der vorangehenden Ansprüche, **dadurch gekennzeichnet, dass** der Kunststoffschlauch (T) kontinuierlich extrudiert wird und nach der Übergäbe des extrudierten Kunststoffschlauches (T) an die Blasformkavitäten (71, 72, 73) und während des Blasvorgangs der relative Abstand zwischen dem Extruderkopf (4) und der Blasformwerkzeuganordnung (6) vergrössert wird.

7. Verfahren nach Anspruch 6, **dadurch gekennzeichnet, dass** die Abstandsveränderung durch Wegbewegen des Extruderkopfes (4) von der bezüglich ihrer Lage im wesentlichen stationären Blasformwerkzeuganordnung (6) erfolgt.

8. Verfahren nach Anspruch 6 oder 7, **dadurch gekennzeichnet, dass** die Abstandsveränderung mit einer Geschwindigkeit erfolgt die gleich oder grösser ist als eine Austrittsgeschwindigkeit des Kunststoffschlauchs (T) aus der Extrusionsdüse (5) des Extruderkopfes (4).

9. Verfahren nach einem der Ansprüche 1- 5, **dadurch gekennzeichnet, dass** der Extruderkopf als ein Staukopf mit einer Extrusionsdüse ausgebildet ist, mit dem der Kunststoffschlauch diskontinuierlich in die Blasformkavität der Blasformwerkzeuganordnung ausgestossen wird, und dass während des Ausstossens des Kunststoffschlauchs der relative Abstand des Blasdorns vom Staukopf vergrössert wird.

10. Verfahren nach Anspruch 9, **dadurch gekennzeichnet, dass** die Geschwindigkeit der Abstandsveränderung des Blasdorns vom Staukopf gleich oder grösser ist als die Ausstossgeschwindigkeit des Kunststoffschlauchs aus der Extrusionsdüse.

11. Verfahren nach einem der vorangehenden Ansprüche, **dadurch gekennzeichnet, dass** die Blasformwerkzeuganordnung (6) wenigstens zwei voneinander trennbare Werkzeugteile (8, 9) umfasst, die zum Öffnen und Schliessen der Blasformwerkzeuganordnung (6) im wesentlichen senkrecht zur Extrusionsrichtung des Kunststoffschlauchs (T) aus einer Offen-Endstellung in eine Geschlossen-Endstellung und umgekehrt bewegt werden.

12. Verfahren nach einem der vorangehenden Ansprüche, **dadurch gekennzeichnet, dass** ein Extruderkopf (4) mit einem Mehrfachextrusionsdüsenwerkzeug eingesetzt wird, eine Blasformwerkzeuganordnung (6) verwendet wird, welche mit einer korrespondierenden Anzahl von Formhohlräumen (7) ausgestattet ist, die jeweils aus mehreren axial untereinander angeordneten Blasformkavitäten (71, 72, 73) zusammengesetzt sind.

13. Verfahren nach einem der vorangehenden Ansprüche, **dadurch gekennzeichnet, dass** die aufgeblasenen Kunststoffbehälter (B) zum Entformen mit wenigstens einem einem gegenüber der Forminnenwandung lateral ausfahrbaren Ausstosser (19, 20) beaufschlagt werden, wobei die Behälter (B) vom Ausstosser (19, 20) im Bereich der aneinandergrenzenden Mündungen des spiegelsymmetrisch angeordneten Paars von Blasformkavitäten (71, 72) berührt werden.

14. Extrusionsblasmaschine zur Herstellung von Kunststoffbehältern, insbesondere von Kunststoffflaschen, mit einem in einem Geräterahmen angeordneten Extruderkopf (4) mit einer Extrusionsdüse (5), einer Blasformwerkzeuganordnung (6) mit einem Formhohlraum (7), wobei der Formhohlraum (7) mehrere axial untereinander angeordnete Blasformkavitäten (71, 72, 73) aufweist, wobei jeweils zwei der Blasformkavitäten (71, 72) spiegelsymmetrisch zueinander und an ihren Mündungsbereichen zusammenhängend angeordnet sind und eine einzelne Blasformkavität (73) durch einen Abquetschbereich von einem Bodenabschnitt der benachbarten Blasformkavität (72) getrennt ist und eine Mündung (10) an einer Aussenfläche der Blasformwerkzeuganordnung (6) aufweist, **dadurch gekennzeichnet, dass** eine der Anzahl der paarweise spiegelsymmetrisch zueinander angeordneten Blasformkavitäten (71, 72) entsprechende Zahl von geführten Blasdornen (18) vorgesehen ist, die in Bohrungen (61) der Blasformanordnung (6) lateral verschiebbar sind und jeweils im Bereich der aneinandergrenzenden Mündungen in die beiden zusammenhängenden Blasformkavitäten (71, 72) einfahrbar sind, um die dort eingelegen Abschnitte des extrudierten Kunststoffschlauchs (T) gemäss den Blasformkavitäten (71, 72) aufzublasen, und ein weiterer, freier Blasdorn (11) vorgesehen ist, der axial in die Mündung (10) der einzelnen Blasformkavität (73) einfahrbar ist, um den dort befindlichen Abschnitt des Kunststoffschlauchs (T) aufzublasen, und Mittel zum Entformen der aufgeblasenen Behälter vorgesehen sind.

15. Extrusionsblasmaschine nach Anspruch 14, **dadurch gekennzeichnet, dass** der Formhohlraum (7) drei axial untereinander angeordnete Blasformkavitäten (71, 72, 73) aufweist.

16. Extrusionsblasmaschine nach Anspruch 14 oder 15, **dadurch gekennzeichnet, dass** die Blasformwerkzeuganordnung (6) wenigstens einen Ausstosser (29, 20) aufweist, der zum Entformen der aufgeblasenen Kunststoffbehälter (B) lateral gegenüber der Forminnenwandung ausfahrbar ist und derart angeordnet ist, dass er beim Ausstossen die Behälter (B) im Bereich der aneinandergrenzenden Mündungen des spiegelsymmetrisch angeordneten Paars von Blasformkavitäten (71, 72) berührt.

17. Extrusionsblasmaschine nach Anspruch 16, **dadurch gekennzeichnet, dass** in jeder Formhälfte (8, 9) der Blasformwerkzeuganordnung (6) ein Ausstosser (19, 20) angeordnet ist.

18. Extrusionsblasmaschine nach einem der Ansprüche 14 -17, **dadurch gekennzeichnet, dass** an axial gegenüberliegenden Seiten der Blasformwerkzeuganordnung (6) Halteeinrichtungen für den extrudierten Kunststoffschlauch (T) vorgesehen sind und an der dem Extruderkopf (4) abgewandten Seite der Blasformwerkzeuganordnung (6) eine Trenneinrichtung (17) angeordnet ist.

19. Extrusionsblasmaschine nach Anspruch 18, **dadurch gekennzeichnet, dass** die Halteeinrichtungen für den Kunststoffschlauch (T) einerseits vom Extruderkopf (4) und andererseits durch den freien Blasdorn (11) gebildet sind.

20. Extrusionsblasmaschine nach Anspruch 19, **dadurch gekennzeichnet, dass** die Blasformwerkzeuganordn.ung (6) zwischen dem Extruderkopf (4) und dem freien Blasdorn (11) angeordnet ist, und die einzelne Blasformkavität (73) an der der Extrusionsdüse (5) abgewandten Seite der Blasformwerkzeuganordnung (6) eine Mündung (10) aufweist, durch welche der freie Blasdorn (11) in die Blasformkavität (73) einfahrbar ist.

21. Extrüsionsblasmaschine nach einem der Ansprüch 14 - 20, **dadurch gekennzeichnet, dass** Stellmittel vorgesehen sind, mit denen während eines Herstellungszyklusses der relative Abstand zwischen Extruderkopf (4) der Blasformwerkzeuganordnung (6) verstellbar ist.

22. Extrusionsblasmaschine nach Anspruch 21, **dadurch gekennzeichnet, dass** die Stellmittel mit dem Extruderkopf (4) verbunden sind.

23. Extrusionsblasmaschine nach Anspruch 14 - 22, **dadurch gekennzeichnet, dass** der Extruderkopf (4) für eine kontinuierliche Extrusion des Kunststoffschlauchs (T) ausgebildet ist.

24. Extrusionsblasmaschine nach einem der Ansprüche 14 bis 22, **dadurch gekennzeichnet, dass** der Extruderkopf als ein Staukopf zum diskontinuierlichen Ausstossen des Kunststoffschlauchs ausgebildet ist, und ein axial angeordneter Blasdorn zumindest mit der Ausstossgeschwindigkeit des Kunststoffschlauchs gegenüber der Blasformwerkzeuganordnung abstandsverstellbar ist.

25. Extrusionsblasmaschine nach einem der Ansprüche 14 - 24, **dadurch gekennzeichnet, dass** die Blasformwerkzeuganordnung (6) wenigstens zwei voneinander trennbare Formteile (8, 9) umfasst, die zum Öffnen und Schliessen im wesentlichen senkrecht zur Extrusionsrichtung des Kunststoffschlauchs (T) aus einer Offen-Endstellung in eine Geschlossen-Endstellung und umgekehrt bewegbar sind.

26. Extrusionsblasmaschine nach einem der Ansprüche 14 - 25, **dadurch gekennzeichnet, dass** ein Extruderkopf (4) mehrere Extrusionsdüsen (5) aufweist, und die Blasformwerkzeuganordnung(6) mit einer korrespondierenden Anzahl von Formhohlräumen (7) ausgestattet ist, die jeweils mehrere axial untereinander angeordnete Blasformkavitäten (71, 72, 73) aufweist, wobei jeweils zwei der Blasformkavitäten (71, 72) spiegelsymmetrisch zueinander und an ihren Mündungsbereichen zusammenhängend angeordnet sind und eine einzelne Blasformkavität (73) durch einen Abquetschbereich von einem Bodenabschnitt der benachbarten Blasformkavität (72) getrennt ist und eine Mündung (10) an einer Aussenfläche der Blasformwerkzeuganordnung (6) aufweist.

## Claims

1. Process for producing plastic containers, especially plastic bottles, in an extrusion blow molding process, in which plastic tubing (T) which has been extruded from an extruder head (4) in a definable cycle is placed in the mold cavity (7) of a blow molding tool arrangement (6), the inserted plastic tubing is (T) by overpressure according to the mold cavity and is then removed from the mold, wherein
- the extruded plastic tubing (T) is inserted into a mold cavity (7) which is composed of several blow mold cavities (71, 72, 73) which are located axially under one another, two of the blow mold cavities (71, 72) at a time being arranged mirror-symmetrically to one another and connected on their mouth regions and an individual blow mold cavity (73) being separated from the bottom section of the adjacent blow mold cavity (72) by a land region and having a mouth (10) on the outer surface of the blow molding tool arrangement (6), **characterized in that**
- there is a number of guided blow mandrels (18) corresponding to the number of pairs of blow mold cavities (71, 72) located mirror symmetrically to one another, which mandrels can be moved laterally in the holes (61) of the blow molding tool arrangement (6) and are each inserted into the two connected blow mold cavities (71, 72) in the region of the mouths which border one another, in order to inflate the sections of the extruded plastic tubing (T) which have been inserted there according to the blow mold cavities (71, 72), while another free blow mandrel (11) is inserted axially into the mouth (10) of the individual blow mold cavity (73) in order to inflate the section of the plastic tubing located there,
- and the containers (B) which have been inflated according to the blow mold cavities (71, 72, 73) are removed from the mold.

2. Process as claimed in claim 1, wherein the extruded plastic tube (T) is inserted into a mold cavity (7) which is equipped with three blow mold cavities (71, 72, 73) located axially under one another.

3. Process as claimed in claim 1 or 2, wherein the plastic tubing (T) is held continuously on opposing sides of the blow molding tool arrangement (6) during an entire extrusion and blowing cycle.

4. Process as claimed in claim 3, wherein the plastic tubing (T) after inflation of the hollow body (B) is detached on the side of the blow molding tool arrangement (6) which faces away from the extruder head (4).

5. Process as claimed in claim 3 or 4, wherein the blow molding tool arrangement (6) relative to the direction of motion of the plastic tubing (T) is located between the extruder head (4) and the free blow mandrel (11) which can be inserted into the mouth (10) of the individual blow mold cavity (7) which is located on the side of the blow molding tool arrangement (6) facing away from the extrusion nozzle (5) for inflating the plastic tubing (T).

6. Process as claimed in one of the preceding claims, wherein the plastic tubing (T) is continuously extruded and after transfer of the extruded plastic tubing (T) to the blow mold cavities (71, 72, 73) and during the blowing process, the relative distance between the extruder head (4) and the blow molding tool arrangement (6) is increased.

7. Process as claimed in claim 6, wherein the distance is changed by moving the extruder head (4) away from the blow molding tool arrangement (6) which is essentially stationary with respect to its position.

8. Process as claimed in claim 6 or 7, wherein the change in distance takes place at a rate which is greater than or equal to the rate of emergence of the plastic tubing (T) from the extrusion nozzle (5) of the extruder head (4).

9. Process as claimed in one of claims 1-5, wherein the extruder head is made as a baffle head with an extrusion nozzle with which the plastic tubing is discontinuously ejected into the blow mold cavity of the blow molding tool arrangement, and wherein during ejection of the plastic tubing the relative distance of the blow mandrel from the baffle head is increased.

10. Process as claimed in claim 9, wherein the rate of change of the distance of the blow mandrel from the baffle head is greater than or equal to the ejection rate of the plastic tubing from the extrusion nozzle.

11. Process as claimed in one of the preceding claims, wherein the blow molding tool arrangement (6) comprises at least two tool parts (8, 9) which can be separated from one another and which can be moved for opening and closing of the blow molding tool arrangement (6) essentially perpendicular to the extrusion direction of the plastic tubing (T) from the open end position into the closed end position and vice versa.

12. Process as claimed in one of the preceding claims, wherein an extruder head (4) with a multiple extrusion nozzle tool is used and a blow molding tool arrangement (6) is used which is equipped with a corresponding number of mold cavities (7) which are each composed of several blow mold cavities (71, 72, 73) which are arranged axially underneath one another.

13. Process as claimed in one of the preceding claims, wherein for purposes of removal from the mold at least one ejector (19, 20) which can be extended laterally relative to the inside wall of the mold acts on the inflated plastic containers (B), the containers (B) being touched by the ejector (19, 20) in the region of the mutually bordering mouths of the mirror-symmetrically arranged pairs of blow mold cavities (71, 72).

14. Extrusion blow molding machine for producing plastic containers, especially plastic bottles, with an extruder head (4) which is located in an equipment frame with an extrusion nozzle (5), a blow molding tool arrangement (6) with a mold cavity (7), wherein the mold cavity (7) has several blow mold cavities (71, 72, 73) which are arranged axially under one another, two of the blow mold cavities (71, 72) at a time being arranged mirror-symmetrically to one another and being connected on their mouth regions, and an individual blow mold cavity (73) being separated by a land region from the bottom section of the adjacent blow mold cavity (72) and having a mouth (10) on the outer surface of the blow molding tool arrangement (6), **characterized in that** there being a number of guided blow mandrels (18) which corresponds to the number of pairs of blow mold cavities (71, 72) arranged mirror-symmetrically to one another and the guided blow mandrels being laterally movable in holes (61) of the blow mold arrangement (6) and each being insertable into the two connected blow mold cavities (71, 72) in the area of the mutually bordering mouths in order to inflate the sections of the extruded plastic tubing (T) which have been inserted there according to the blow mold cavities (71, 72) and there being another, free blow mandrel (11) which can be inserted axially into the mouth (10) of the individual blow mold cavity (73) in order to inflate the section of the plastic tubing (T) located there and means are provided for removing the blown container.

15. Extrusion blow molding machine as claimed in claim 14, wherein the mold cavity (7) has three blow mold cavities (71, 72, 73).

16. Extrusion blow molding machine as claimed in claim 14 or 15, wherein the blow molding tool arrangement (6) has at least one ejector (19, 20) which can be extended for removal of the inflated plastic containers (B) from the mold laterally relative to the internal mold wall and is arranged such that upon ejection it touches the containers (B) in the region of the mutually adjoining mouths of the pairs of blow mold cavities (71, 72) arranged mirror- symmetrically.

17. Extrusion blow molding machine as claimed in claim 16, wherein there is an ejector (19, 20) in each mold half (8, 9) of the blow molding tool arrangement (6).

18. Extrusion blow molding machine as claimed in one of claims 14-17, wherein on axially opposing sides of the blow molding tool arrangement (6) there are holding means for the extruded plastic tubing (T) and on the side of the blow molding tool arrangement (6) facing away from the extruder head (4) there is a cutting means (17).

19. Extrusion blow molding machine as claimed in claim 18, wherein the holding means for the plastic tubing (T) are formed on the one hand by the extruder head (4) and on the other by the free blow mandrel (11).

20. Extrusion blow molding machine as claimed in claim 19, wherein the blow molding tool arrangement (6) is located between the extruder head (4) and the free blow mandrel (11), and on the side of the blow molding arrangement (6) facing away from the extrusion nozzle (5) the individual blow mold cavity (73) has a mouth (10) through which the free blow mandrel (11) can be inserted into the blow mold cavity (73).

21. Extrusion blow molding machine as claimed in one of claims 14-20, wherein there are positioning means with which the relative distance between the extruder head (4) [and] the blow molding tool arrangement (6) can be adjusted during one production cycle.

22. Extrusion blow molding machine as claimed in claim 21, wherein the positioning means are connected to the extruder head (4).

23. Extrusion blow molding machine as claimed in claim 14-22, wherein the extruder head (4) is made for continuous extrusion of the plastic tubing (T).

24. Extrusion blow molding machine as claimed in one of claims 14 to 22, wherein the extruder head is made as a baffle head for discontinuous ejection of the plastic tubing, and an axially arranged blow mandrel is adjustable in distance relative to the blow molding tool arrangement at least with the ejection speed of the plastic tubing.

25. Extrusion blow molding machine as claimed in one of claims 14-24, wherein the blow molding tool arrangement (6) comprises at least two mold parts (8, 9) which can be separated from one another and which can be moved for opening and closing essentially perpendicular to the extrusion direction of the plastic tubing (T) from the open end position into the closed end position and vice versa.

26. Extrusion blow molding machine as claimed in one of claims 14-25, wherein the extruder head (4) has several extrusion nozzles (5) and the blow molding tool arrangement (6) is equipped with a corresponding number of mold cavities (7) and has several blow mold cavities (71, 72, 73) which are arranged axially under one another, two of the blow mold cavities (71, 72) being arranged mirror-symmetrically to one another and connected on their mouth regions and an individual blow mold cavity (73) being separated from the bottom section of the adjacent blow mold cavity (72) by a land region and having a mouth (10) on the outer surface of the blow molding tool arrangement (6).

## Revendications

1. Procédé de fabrication de récipients en plastique, en particulier de bouteilles en plastique, dans un procédé d'extrusion-soufflage pour lequel un tuyau flexible en plastique (T) extrudé par une tête extrudeuse (4) est mis en place à une cadence qui peut être prédéfinie dans un espace creux de moulage (7) d'un arrangement d'outil de moule de soufflage (6), le tuyau flexible en plastique mis en place (T) est soufflé par surpression selon l'espace creux de moulage et est ensuite démoulé, le tuyau flexible en plastique extrudé (T) étant inséré dans un espace creux de moulage (7) qui est composé de plusieurs cavités de moule de soufflage (71, 72, 73) placées axialement l'une en dessous de l'autre, deux des cavités de moule de soufflage (71, 72) étant placées respectivement symétriques inverses l'une par rapport à l'autre et étant placées en communicant au niveau de leurs zones d'embouchure et une cavité de moule de soufflage isolée (73) étant séparée par une zone d'écrasement d'une portion de fond de la cavité de moule de soufflage voisine (72) et présentant une embouchure (10) sur une surface extérieure de l'arrangement d'outil de moule de soufflage, **caractérisé en ce qu'**il est prévu un nombre de mandrins de soufflage guidés (18) correspondant au nombre des cavités de moule de soufflage (71, 72) placées symétriques inverses par paire l'une par rapport à l'autre, mandrins de soufflage qui peuvent être déplacés latéralement dans des forures (61) de l'arrangement d'outil de moule de soufflage (6) et qui sont entrés respectivement dans la zone des embouchures adjacentes dans les deux cavités de moule de soufflage communicantes (71, 72) pour souffler les portions du tuyau en plastique extrudé (T) qui y sont mises en place selon les cavités de moule de soufflage (71, 72) tandis qu'un autre mandrin de soufflage libre (11) est entré axialement dans l'embouchure (10) de la cavité de moule de soufflage isolée (73) pour souffler la portion de tuyau flexible en plastique qui s'y trouve et les récipients soufflés (B) selon les cavités de moule de soufflage (71, 72, 73) sont démoulés.

2. Procédé selon la revendication 1, **caractérisé en ce que** le tuyau flexible en plastique extrudé (T) est mis en place dans un espace creux de moulage (7) qui est équipé de trois cavités de moule de soufflage (71, 72, 73) placées axialement l'une en dessous de l'autre.

3. Procédé selon la revendication 1 ou 2, **caractérisé en ce que** le tuyau flexible en plastique (T) est maintenu continuellement pendant un cycle complet d'extrusion et de soufflage sur des côtés opposés l'un à l'autre de l'arrangement d'outil de moule de soufflage (6).

4. Procédé selon la revendication 3, **caractérisé en ce que** le tuyau flexible en plastique (T) est détaché après le soufflage du corps creux (B) sur le côté de l'arrangement d'outil de moule de soufflage (6) qui est opposé à la tête extrudeuse (4).

5. Procédé selon la revendication 3 ou 4, **caractérisé en ce que** l'arrangement d'outil de moule de soufflage (6) est placé par rapport au sens de déplacement du tuyau flexible en plastique (T) entre la tête extrudeuse (4) et le mandrin de soufflage libre (11) qui peut être introduit dans l'embouchure (10) de la cavité de moule de soufflage isolée (7) pour souffler le tuyau flexible en plastique (T), cavité de moule de soufflage qui est placée sur le côté de l'arrangement d'outil de moule de soufflage (6) qui est opposé à la tuyère d'extrusion (5).

6. Procédé selon l'une des revendications précédentes, **caractérisé en ce que** le tuyau flexible en plastique (T) est extrudé en continu et que l'écart relatif entre la tête extrudeuse (4) et l'arrangement d'outil de moule de soufflage (6) s'agrandit après le transfert du tuyau flexible en plastique extrudé (T) aux cavités de moule de soufflage (71, 72, 73) et pendant l'opération de soufflage.

7. Procédé selon la revendication 6, **caractérisé en ce que** la modification d'écart se fait en éloignant la tête extrudeuse (4) de l'arrangement d'outil de moule de soufflage (6) substantiellement stationnaire quant à sa position.

8. Procédé selon la revendication 6 ou 7, **caractérisé en ce que** la modification d'écart se fait à une vitesse qui est égale ou supérieure à une vitesse de sortie du tuyau flexible en plastique (T) par la tuyère d'extrusion (5) de la tête extrudeuse (5).

9. Procédé selon l'une des revendications 1 à 5, **caractérisé en ce que** la tête extrudeuse est configurée comme une tête d'accumulation avec une tuyère d'extrusion avec laquelle le tuyau flexible en plastique est éjecté de manière discontinue dans la cavité de moule de soufflage de l'arrangement d'outil de moule de soufflage et que l'écart relatif entre le mandrin de soufflage et la tête d'accumulation s'agrandit pendant l'éjection du tuyau flexible en plastique.

10. Procédé selon la revendication 9, **caractérisé en ce que** la vitesse de la modification d'écart entre le mandrin de soufflage et la tête d'accumulation est égale ou supérieure à la vitesse de sortie du tuyau flexible en plastique par la tuyère d'extrusion.

11. Procédé selon l'une des revendications précédentes, **caractérisé en ce que** l'arrangement d'outil de moule de soufflage (6) comprend au moins deux parties d'outil (8, 9) qui peuvent être séparées l'une de l'autre qui sont déplacées, pour l'ouverture et la fermeture de l'arrangement d'outil de moule de soufflage (6) de manière essentiellement perpendiculaire au sens d'extrusion du tuyau flexible en plastique (T) d'une position terminale ouverte à une position terminale fermée et vice-versa.

12. Procédé selon l'une des revendications précédentes, **caractérisé en ce qu'**une tête extrudeuse (4) est mise en place avec un outil de tuyère d'extrusion multiple, qu'un arrangement d'outil de moule de soufflage (6) est utilisé qui est équipé d'un nombre correspondant d'espaces creux de moulage (7) qui sont composés respectivement de plusieurs cavités de moule de soufflage (71, 72, 73) placées axialement l'une en dessous de l'autre.

13. Procédé selon l'une des revendications précédentes, **caractérisé en ce que** les récipients soufflés en plastique (B) sont chargés, pour le démoulage, avec au moins un éjecteur (19, 20) pouvant se déployer latéralement en face de la paroi intérieure du moule, les récipients (B) étant touchés par l'éjecteur (19, 20) dans la zone des embouchures adjacentes de la paire de cavités de moule de soufflage (71, 72) placée symétrique inverse.

14. Machine d'extrusion soufflage pour la fabrication de récipients en plastique, en particulier de bouteilles en plastique, avec une tête extrudeuse (4) avec une tuyère d'extrusion (5) placée dans un bâti d'appareil, un arrangement d'outil de moule de soufflage (6) avec un espace creux de moulage (7), l'espace creux de moulage (7) présentant plusieurs cavités de moule de soufflage (71, 72, 73) placées axialement l'une en dessous de l'autre, deux des cavités de moule de soufflage (71, 72) étant placées respectivement symétriques inverses l'une par rapport à l'autre et étant placées en communicant au niveau de leurs zones d'embouchure et une cavité de moule de soufflage isolée (73) étant séparée par une zone d'écrasement d'une portion de fond de la cavité de moule de soufflage voisine (72) et présentant une embouchure (10) sur une surface extérieure de l'arrangement d'outil de moule de soufflage (6), **caractérisée en ce qu'**il est prévu un nombre de mandrins de soufflage guidés (18) correspondant au nombre des cavités de moule de soufflage (71, 72) placées symétriques inverses par paire l'une par rapport à l'autre, mandrins de soufflage qui peuvent être déplacés latéralement dans des forures (61) de l'arrangement d'outil de moule de soufflage (6) et qui peuvent entrer respectivement dans la zone des embouchures adjacentes dans les deux cavités de moule de soufflage communicantes (71, 72) pour souffler les portions du tuyau en plastique extrudé (T) qui y sont mises en place selon les cavités de moule de soufflage (71, 72) et un autre mandrin de soufflage libre (11) est prévu qui peut entrer axialement dans l'embouchure (10) de la cavité de moule de soufflage isolée (73) pour souffler la portion de tuyau flexible en plastique (T) qui s'y trouve et qu'il est prévu des moyens pour démouler les récipients soufflés.

15. Machine d'extrusion soufflage selon la revendication 14, **caractérisée en ce que** l'espace creux de moulage (7) présente trois cavités de moule de soufflage (71, 72, 73) placées axialement l'une en dessous de l'autre.

16. Machine d'extrusion soufflage selon la revendication 14 ou 15, **caractérisée en ce que** l'arrangement d'outil de moule de soufflage (6) présente au moins un éjecteur (19, 20) qui peut se déployer latéralement en face de la paroi intérieure du moule pour démouler les récipients soufflés en plastique (B) et qui est placé de telle manière qu'il touche, lors de l'éjection, les récipients (B) dans la zone des embouchures adjacentes de la paire de cavités de moule de soufflage (71, 72) placée symétrique inversée.

17. Machine d'extrusion soufflage selon la revendication 16, **caractérisée en ce qu'**un éjecteur (19, 20) est placé dans chaque moitié de moule (8, 9) de l'arrangement d'outil de moule de soufflage (6).

18. Machine d'extrusion soufflage selon l'une des revendications 14-17, **caractérisée en ce qu'**il est prévu des dispositifs de retenue pour le tuyau flexible en plastique (T) sur des côtés axialement opposés de l'arrangement d'outil de moule de soufflage (6) et qu'un dispositif de séparation (17) est placé sur le côté de l'arrangement d'outil de moule de soufflage (6) qui est opposé à la tête extrudeuse (4).

19. Machine d'extrusion soufflage selon la revendication 18, **caractérisée en ce que** les dispositifs de maintien pour le tuyau flexible en plastique (T) sont formés d'une part par la tête extrudeuse (4) et d'autre part par le mandrin de soufflage libre (11).

20. Machine d'extrusion soufflage selon la revendication 19, **caractérisée en ce que** l'arrangement d'outil de moule de soufflage (6) est placé entre la tête extrudeuse (4) et le mandrin de soufflage libre (11) et la cavité de moule de soufflage isolée (73) présente, sur le côté de l'arrangement d'outil de moule de soufflage (6) qui est opposé à la tuyère d'extrusion (5), une embouchure (10) par laquelle le mandrin de soufflage libre (11) peut entrer dans la cavité de moule de soufflage (73).

21. Machine d'extrusion soufflage selon l'une des revendications 14-20, **caractérisée en ce qu'**il est prévu des moyens de réglage avec lesquels l'écart relatif entre la tête extrudeuse (4) de l'arrangement d'outil de moule de soufflage (6) peut être réglée pendant un cycle de fabrication.

22. Machine d'extrusion soufflage selon la revendication 21, **caractérisée en ce que** les moyens de réglage sont reliés à la tête extrudeuse (4).

23. Machine d'extrusion soufflage selon l'une des revendications 14-22, **caractérisée en ce que** la tête extrudeuse (4) est configurée pour une extrusion continue du tuyau flexible en plastique (T).

24. Machine d'extrusion soufflage selon l'une des revendications 14-22, **caractérisée en ce que** la tête extrudeuse (4) est configurée comme une tête d'accumulation pour l'éjection discontinue du tuyau flexible en plastique et qu'un mandrin de soufflage placé axialement peut être réglé quant à son écart par rapport à l'arrangement d'outil de moule de soufflage (6) au moins avec la vitesse d'éjection du tuyau flexible en plastique.

25. Machine d'extrusion soufflage selon l'une des revendications 14-24, **caractérisée en ce que** l'arrangement d'outil de moule de soufflage (6) comprend au moins deux pièces moulées (8, 9) qui peuvent être séparées l'une de l'autre qui peuvent être déplacées, pour l'ouverture et la fermeture, de manière essentiellement perpendiculaire au sens d'extrusion du tuyau flexible en plastique (T) d'une position terminale ouverte à une position terminale fermée et vice-versa.

26. Machine d'extrusion soufflage selon l'une des revendications 14-25, **caractérisée en ce qu'**une tête extrudeuse (4) présente plusieurs tuyères d'extrusion (5) et que l'arrangement d'outil de moule de soufflage (6) est équipé d'un nombre correspondant d'espaces creux de moulage (7) qui présente respectivement plusieurs cavités de moule de soufflage (71, 72, 73) placées axialement l'une en dessous de l'autre, deux des cavités de moule de soufflage (71, 72) étant placées respectivement symétriques inverses l'une par rapport à l'autre et en communicant au niveau de leurs zones d'embouchure et une cavité de moule de soufflage isolée (73) étant séparée par une zone d'écrasement d'une portion de fond de la cavité de moule de soufflage voisine (72) et présentant une embouchure (10) sur une surface extérieure de l'arrangement d'outil de moule de soufflage (6).
